(19) Europäisches Patentamt
European Patent Office
Office européen des brevets

(11) EP 1 252 202 B1

(12) EUROPÄISCHE PATENTSCHRIFT

(45) Veröffentlichungstag und Bekanntmachung des Hinweises auf die Patenterteilung:
**22.02.2006 Patentblatt 2006/08**

(21) Anmeldenummer: **00981361.9**

(22) Anmeldetag: **11.12.2000**

(51) Int Cl.:
***C08F 10/06*** (2006.01) ***C08L 23/10*** (2006.01)

(86) Internationale Anmeldenummer:
**PCT/EP2000/012511**

(87) Internationale Veröffentlichungsnummer:
**WO 2001/046274 (28.06.2001 Gazette 2001/26)**

# (54) TEILKRISTALLINE PROPYLENPOLYMERISAT-ZUSAMMENSETZUNG ZUR HERSTELLUNG VON BIAXIAL GERECKTEN POLYPROPYLENFOLIEN

PARTLY CRYSTALLINE PROPYLENE POLYMERISATE COMPOSITION FOR PRODUCTION OF BIAXIAL-STRETCHED POLYPROPYLENE FILMS

COMPOSITION DE POLYMERE DE PROPYLENE SEMI-CRISTALLIN, SERVANT A PRODUIRE DES FILMS DE POLYPROPYLENE BIORIENTE

(84) Benannte Vertragsstaaten:
**AT BE CH CY DE DK ES FI FR GB GR IE IT LI LU MC NL PT SE TR**

(30) Priorität: **21.12.1999 DE 19962130**
**03.02.2000 DE 10004660**

(43) Veröffentlichungstag der Anmeldung:
**30.10.2002 Patentblatt 2002/44**

(73) Patentinhaber: **Basell Polyolefine GmbH**
**50389 Wesseling (DE)**

(72) Erfinder:
- **SUHM, Jürgen**
**67063 Ludwigshafen (DE)**
- **RAUSCHENBERGER, Volker**
**67304 Eisenberg (DE)**
- **LILGE, Dieter**
**67117 Limburgerhof (DE)**
- **HINGMANN, Roland**
**E-08960 Barcelona (ES)**
- **STRICKER, Florian**
**69120 Heidelberg (DE)**

(74) Vertreter: **Giberti, Stefano**
**Basell Poliolefine Italia S.r.l.**
**Intellectual Property**
**P.le Privato G. Donegani 12**
**Casella Postale 19**
**44100 Ferrara (IT)**

(56) Entgegenhaltungen:
**EP-A- 0 444 671** **EP-A- 0 643 100**
**EP-A- 0 887 357** **WO-A-96/20225**
**WO-A-98/10016** **WO-A-98/56580**
**WO-A-98/59002** **WO-A-99/58587**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 252 202 B1

## Beschreibung

Die vorliegende Erfindung betrifft eine teilkristalline Propylenpolymerisat-Zusammensetzung hergestellt durch Polymerisation von Propylen, Ethylen und/oder $C_4$-$C_{18}$-Alk-1-enen, wobei mindestens 50 mol-% der enthaltenen Monomereinheiten durch Polymerisation von Propylen entstanden sind und mindestens 20 Gew. -% der Propylenpolymerisat-Zusammensetzung durch Polymerisation mittels Metallocenkatalysatoren erfolgte,
mit einer Schmelztemperatur $T_M$ im Bereich von 135°C bis 165°C,
wobei die Schmelztemperatur $T_M$ durch Differential Scanning Calorimetry (DSC) nach ISO-Norm 3146 durch Aufheizen mit einer Heizgeschwindigkeit von 20°C/min einer vorher aufgeschmolzenen Probe bestimmt und in °C gemessen wird und das Maximum der erhaltenen Kurve darstellt,
und sich die teilkristalline Propylenpolymerisat-Zusammensetzung in
von 65 bis 85 Gew.-% einer Hauptkomponente A,
von 10 bis 35 Gew.-% einer Nebenkomponente B und
von 0 bis 25 Gew.-% einer Nebenkomponente C
zerlegen läßt,
wobei man zur Bestimmung der Anteile der Komponenten A, B und C eine TREF (Temperature Rising Elution Fractionation) durchführt, bei der man die Polymerisate zunächst in siedendem Xylol löst, anschließend die Lösung mit einer Kühlrate von 10°C/h auf 25°C abkühlt und dann mit steigender Temperatur zunächst den bei der Temperatur ($T_M$/2) +7,5°C in Xylol löslichen Anteil der Propylenpolymerisat-Zusammensetzung löst und vom verbleibenden Feststoff abtrennt und anschließend mit steigender Temperatur bei allen höheren Temperaturen 70°C, 75°C, 80°C, 85°C, 90°C, 94°C, 98°C, 102°C, 107°C, 112°C, 117°C, 122°C und 125°C die im Temperaturintervall zwischen dieser Elutionstemperatur und der vorhergehenden Elutionstemperatur löslichen Fraktionen eluiert und diejenigen Fraktionen bei der weiteren Auswertung berücksichtigt, deren Masseanteil an der eingewogenen Propylenpolymerisat-Zusammensetzung mindestens 1 Gew.-% beträgt, und von allen zu berücksichtigenden Fraktionen die Molmassenverteilung durch Gelpermeationschromatographie (GPC) bei 145°C in 1,2,4-Trichlorbenzol mißt,
und die Hauptkomponente A von allen Fraktionen gebildet wird, die bei einer Temperatur oberhalb von ($T_M$/2)+7,5°C eluiert werden und eine mittlere Molmasse $M_n$ (Zahlenmittel) ≥ 120 000 g/mol aufweisen,
die Nebenkomponente B von der Fraktion gebildet wird, die bei der Temperatur ($T_M$/2)+7,5°C eluiert wird, und
die Nebenkomponente C von allen Fraktionen gebildet wird, die bei einer Temperatur oberhalb von ($T_M$/2)+7,5°C eluiert werden und eine mittlere Molmasse $M_n$ (Zahlenmittel) < 120 000 g/mol aufweisen.

Außerdem betrifft die Erfindung Verfahren zur Herstellung der teilkristallinen Propylenpolymerisat-Zusammensetzung, die Verwendung der teilkristallinen Propylenpolymerisat-Zusammensetzung zur Herstellung von Folien, Fasern und Formkörpern sowie die Folien, Fasern und Formkörper aus dieser Zusammensetzung.

Unter der Bezeichnung Polypropylen werden im Allgemeinen eine Vielzahl unterschiedlicher Polymerisate verstanden, die alle gemeinsam haben, daß sie zu einem wesentlichen Teil aus dem Monomer Propylen aufgebaut wurden. Die verschiedenen Polypropylene werden in der Regel durch koordinative Polymerisation an Katalysatoren aus Übergangsmetallen erhalten, die die Monomere überwiegend geordnet in eine wachsende Polymerkette einbauen.

Mit den üblichen Koordinationskatalysatoren erhält man bei der Polymerisation von Propylen Polymerketten, die an jedem zweiten Kohlenstoffatom eine Methylseitengruppe aufweisen. Die Polymerisation verläuft also regioselektiv. Je nach Orientierung der Monomere beim Einbau in die Kette werden verschiedene stereochemische Konfigurationen erhalten. Sind die Monomere beim Einbau jeweils gleich angeordnet, befinden sich dann in der Polymerkette alle Methylseitengruppen auf der selben Seite der Hauptkette. Man spricht von isotaktischem Polypropylen. Werden die Monomere mit jeweils alternierender räumlicher Orientierung in die Kette eingebaut, bezeichnet man das erhaltene Polypropylen als syndiotaktisch. Beide stereoregulär aufgebauten Typen sind teilkristallin und weisen somit eine Schmelztemperatur auf.

Da die Koordinationskatalysatoren die Propylen-Monomere jedoch nicht absolut einheitlich einbauen, sondern manche Monomere anders einfügen als die Mehrheit der anderen, weisen die gebildeten Polymerketten gegenüber der vorherrschenden Anordnung jeweils "Fehler" auf. Deren Anzahl kann erheblich variieren.

Je länger die fehlerfrei aufgebauten Sequenzen der Polymerketten sind, desto leichter kristallisieren die Ketten und desto höher sind die Kristallinität und die Schmelztemperatur des Polypropylens.

Sind die Methylseitengruppen stereochemisch unregelmäßig angeordnet, bezeichnet man die Polypropylene als ataktisch. Diese sind vollständig amorph und weisen somit keinen Schmelzpunkt auf.

In technischem Maßstab wird Polypropylen zur Zeit meistens mit heterogenen Katalysatoren auf Basis von Titan hergestellt, wobei ein überwiegend isotaktisches Polymerisat erzeugt wird. Diese Katalysatoren, für die sich die Bezeichnung Ziegler-Natta-Katalysatoren eingebürgert hat, weisen mehrere unterschiedliche polymerisationsaktive Zentren auf. Die Zentren unterschieden sich dabei sowohl in ihrer Stereospezifität, d.h. darin, wieviele "Fehler" die entstandenen Ketten aufweisen, als auch darin, wie hoch die mittlere Molmasse der gebildeten Ketten ist. Als überwiegende Fehler werden jeweils Stereofehler beobachtet, d.h. einzelne Propylen-Monomere wurden syndiospezifisch anstatt isospezifisch eingebaut. Das Resultat der Polymerisation mit solchen heterogenen Katalysatoren ist also eine Mischung verschiedener Polymerketten, die sich sowohl in ihrer Stereochemie als auch in ihrer Molmasse unterscheiden.

Im Gegensatz zu den Ziegler-Natta-Katalysatoren sind Metallocene polymerisationsaktive Verbindungen, die nur ein eindeutig charakterisierbares Polymerisationszentrum aufweisen. Man erhält Polymerketten, die sowohl in der Stereochemie als auch in der Molmasse einheitlich sind. Die durch Metallocenkatalysatoren gebildeten Polypropylene unterscheiden sich von denen der heterogenen Katalysatoren auch dadurch, daß als überwiegende Fehlstelle im Kettenaufbau nicht Stereofehler sondern Regiofehler auftreten, d.h. bei diesen Polypropylenen trägt nicht mehr exakt jedes zweiten Kohlenstoffatom eine Methylseitengruppe.

Die durch Metallocenkatalyse erhaltenen Polypropylene ermöglichen es also, Folien, Fasern und Formkörpern mit neuartigen Eigenschaftskombinationen herzustellen.

Ein wesentliches Anwendungsgebiet für Polypropylene sind Folien, insbesondere biaxial gereckten Folien, die häufig auch als BOPP-("Biaxial Orientiertes Polypropylen-") Folien bezeichnet werden.

Eine generelles Ziel für fast alle Entwicklungen auf dem Gebiet der Polypropylene ist es gewesen, die löslichen Anteile der eingesetzten Polymerisate zu verringern. Möglich ist dies häufig durch die Verwendung optimierter konventioneller Ziegler-Natta-Katalysatoren. Dadurch werden zum einen die organoleptischen Eigenschaften verbessert, was vorteilhaft für Anwendungen im medizinischen und Nahrungsmittelsektor ist, und zum anderen wirkt sich dies positiv auf die mechanischen Eigenschaften, insbesondere die Steifigkeit, aus. Für die Herstellung von biaxial gereckten Polypropylen-Folien lassen sich solche Polypropylene mit abgesenkten löslichen Anteile allerdings nicht einsetzen, da sie sich nicht bzw. nur schlecht zu den Folien verarbeiten lassen.

Mit Metallocenkatalysatoren hergestellte Polymerisate weisen an sich nur einen sehr geringen Gehalt an löslichen Anteile auf. Es besteht deshalb ein verstärktes Interesse daran, Propylenpolymerisate zu finden, die sich gut zu BOPP-Folien verarbeiten lassen und durch Polymerisation mittels Metallocenkatalysatoren erhalten wurden.

Die EP-A 745 638 offenbart biaxial orientierte Polypropylenfolien, deren Basisschicht aus einem mittels Metallocen-Katalysator hergestellten Polypropylen besteht. Dieses Polypropylen weist eine mittlere isotaktische Blocklänge von größer 40, einen n-heptanlöslichen Anteil von kleiner 1 % und eine enge Molmassenverteilung auf.

Die EP-A 905 173 beschreibt ein Verfahren zur Herstellung von biaxial orientierte Folien, bei dem isotaktische Polypropylene eingesetzt werden, die mindestens 0,5 % 2,1-Insertionen, mindestens 96 % meso-Pentaden und mindestens 99% meso-Diaden enthalten und mittels eines verbrückten, substituierte Indengruppen enthaltenden Metallocenkomplexes hergestellt wurden, sowie die erhaltenen biaxial orientierten Folien.

Die WO 99/58587 beschreibt zur Herstellung von biaxial orientierten Polypropylenfolien geeignete, durch Metallocenkatalyse hergestellte Propylenhomopolymerisate mit einer breiten Molmasseverteilung, die durch Polymerisation in einer Reaktorkaskade durch Variation der Konzentration eines Kettenübertragungsreagenzes hergestellt werden können.

Die in diesen Dokumenten beschriebenen, mit Metallocenen hergestellten Propylenpolymerisate ermöglichen zwar die Herstellung von biaxial gereckten Folien, die Verarbeitbarkeit ist aber noch verbesserungswürdig. Insbesondere das Verarbeitungsfenster, d.h. der Temperaturbereich, in dem eine störungsfrei ablaufende Herstellung von biaxial gereckten Polypropylen-Folien möglich ist, ist zu schmal. Ein möglichst breites Verarbeitungsfenster wird unter anderem deshalb angestrebt, damit der Produktionsprozeß nicht zu empfindlich auf Temperaturschwankungen reagiert.

Die WO 98/10016 beschreibt teilkristalline Propylenpolymerisat-Zusammensetzungen, die sowohl eine Propylenhomopolymerisat-Komponente als auch eine Propylencopolymerisat-Komponente enthalten. Hergestellt werden die Propylenpolymerisat-Zusammensetzungen durch Verwendung eines Metallocen-Katalysatorsystems, das mindestens zwei verschiedene Metallocene enthält und in mindestes zwei Polymerisationsstufen polymerisiert wird, wobei in einer Stufe das Propylenhomopolymerisat und in einer anderen Stufe das Propylencopolymerisat mit einem geringen Anteil an Comonomer hergestellt wird. Diese Zusammensetzungen besitzen gegenüber normalen Metallocen-Polypropylenen eine verbreiterte Molmassenverteilung und eine verbreiterte Zusammensetzungsverteilung (siehe auch A. K. Mehta, M. C. Chen, J. J. McAlpin, ""Potential Film Applications of Metallocene-based Propylene Polymers from Exxpol Catalysis", eds.: G. M. Benedikt, B. L. Goodall, Plastic Design Library, 1998). Sie sind für die Herstellung von orientierten Folien geeignet, haben einen relativ breiten Verarbeitungsbereich und lassen sich bei niedrigeren Temperaturen recken als konventionelle Polypropylene. Nachteilig ist jedoch, daß die Herstellung der Propylenpolymerisat-Zusammensetzungen aufwendig ist. Außerdem besteht Bedarf an einem noch breiteren Verarbeitungsfenster.

EP 0 887 357 beschreibt Polypropylenpolymerisate und deren Fraktionierung nach TREF sowie deren Verwendung zur Herstellung von Filmen.

Diese Propylenpolymerisate werden mit Hilfe eines Ziegler-Natta-Katalysators hergestellt und weisen Schmelzpunkte höher als 165°C auf.

WO 98/59002 beschreibt heterophasiges Polypropylen und seine Verwendung für Filme. Diese Propylenpolymerisate sind weich. Diese Propylenpolymerisate werden ebenfalls mit Hilfe eines Ziegler-Natta-Katalysators hergestellt Die Schmelzpunkte der Produkte liegen unter 135°C.

Der vorliegenden Erfindung lag daher die Aufgabe zugrunde, den geschilderten Nachteilen abzuhelfen und

Propylenpolymerisat-Zusammensetzungen zu entwickeln, die sich gut zu BOPP-Folien verarbeiten lassen und einen möglichst hohen Anteil an durch Metallocenkatalyse hergestellten Polymerisaten aufweisen. Diese Polymerisate sollten mit einem möglichst wenig aufwendigen Verfahren zugänglich sein, einen nur sehr geringen Anteil an löslichen Anteilen enthalten, ein breites Verarbeitungsfenster zu biaxial gereckten Folien haben und BOPP-Folien mit guten Eigenschaften, insbesondere einer hohen Steifigkeit und einer guten Barrierewirkung liefern.

Demgemäß wurden die eingangs definierte teilkristalline Propylenpolymerisat-Zusammensetzung gefunden sowie Verfahren zur Herstellung der teilkristallinen Propylenpolymerisat-Zusammensetzung, die Verwendung der teilkristallinen Propylenpolymerisat-Zusammensetzung zur Herstellung von Folien, Fasern und Formkörpern sowie die Folien, Fasern und Formkörper aus dieser Zusammensetzung.

Die erfindungsgemäße teilkristalline Propylenpolymerisat-Zusammensetzung wird durch Polymerisation von Propylen, Ethylen und/oder $C_4$-$C_{18}$-Alk-1-enen hergestellt. Unter der Bezeichnung $C_4$-$C_{18}$-Alk-1-ene sollen lineare oder verzweigte Alk-1-ene verstanden werden, die von vier bis achtzehn Kohlenstoffatome aufweisen. Bevorzugt sind lineare Alk-1-ene. Insbesondere sind Ethylen, But-1-en, Pent-1-en, Hex-1-en, Hept-1-en oder Oct-1-en oder Gemische aus diesen Comonomeren zu nennen, wobei bevorzugt Ethylen oder But-1-en verwendet wird. Die Propylenpolymerisat-Zusammensetzung enthält mindestens 50 mol-% an Monomereinheiten, die durch Polymerisation von Propylen entstanden sind. Bevorzugt ist der Gehalt an von Propylen abgeleiteten Monomereinheiten mindestens 70 mol-% und insbesondere mindestens 85 mol-%. Bei der Herstellung der erfindungsgemäßen Propylenpolymerisat-Zusammensetzung kann aber auch als einziges Monomer Propylen eingesetzt worden sein, d.h. die Propylenpolymerisat-Zusammensetzung kann ein Propylenhomopolymerisat sein. Falls ein oder mehrere Comonomere verwendet wurden, kann es sein, daß die ganze Propylenpolymerisat-Zusammensetzung eine im wesentlichen gleiche Comonomerverteilung im Sinne von statistischen Copolymerisaten besitzt. Es kann aber auch sein, daß es sich wie bei den sogenannten Propylen-Impactcopolymerisaten um eine Mischung verschiedener Komponenten handelt, die unterschiedliche Comonomergehalte aufweisen.

Erfindungsgemäß werden mindestens 20 Gew.-% der Propylenpolymerisat-Zusammensetzung durch Polymerisation mittels Metallocenkatalysatoren erhalten. Bevorzugt liegt der Anteil des Metallocen-Polypropylens bei mindestens 50 Gew. -% und insbesondere bei mindestens 80 Gew.-%. In einer ganz besonders bevorzugten Ausführungsform erfolgt die Polymerisation der gesamten Propylenpolymerisat-Zusammensetzung durch Metallocenkatalysatoren.

Unter Metallocenkatalysatoren sollen alle Katalysatorsysteme verstanden werden, die mindesten eine Metallocenverbindung enthalten. Metallocene sind hierbei alle Komplexverbindungen aus Metallen von Nebengruppen des Periodensystems mit organischen Liganden, die zusammen mit metalloceniumionenbildenden Verbindungen wirksame Katalysatorsysteme ergeben.

Erfindungsgemäß geeignete Metallocenkatalysatoren enthalten als aktive Bestandteile in der Regel

A) mindestens einen Metallocenkomplex der allgemeinen Formel (I)

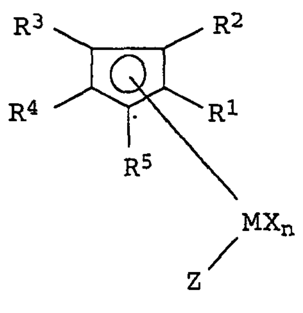

(I)

in der die Substituenten und Indizes folgende Bedeutung haben:

M Titan, Zirkonium, Hafnium, Vanadium, Niob oder Tantal, sowie Elemente der III. Nebengruppe des Periodensystems und der Lanthanoiden,

X Fluor, Chlor, Brom, Iod, Wasserstoff, $C_1$-$C_{10}$-Alkyl, $C_6$-$C_{15}$-Aryl, Alkylaryl mit 1 bis 10 C-Atomen im Alkylrest und 6 bis 20 C-Atomen im Arylrest, $-OR^6$ oder $-NR^6R^7$,

n 1, 2 oder 3, wobei n der Wertigkeit von M minus der Zahl 2 entspricht,

wobei

$R^6$ und $R^7$ $C_1$-$C_{10}$-Alkyl, $C_6$-$C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und

die Reste X gleich oder verschieden sind,

$R^1$ bis $R^5$ Wasserstoff, $C_1$-$C_{10}$-Alkyl, 5- bis 7-gliedriges Cycloalkyl, das seinerseits durch $C_1$-$C_{10}$-Alkyl substituiert sein kann, $C_6$-$C_{15}$-Aryl oder Arylalkyl, wobei auch zwei benachbarte Reste gemeinsam für 4 bis 15 C-Atome aufweisende gesättigte oder ungesättigte cyclische Gruppen stehen können, oder $Si(R^8)_3$ mit

$R^8$ $C_1$-$C_{10}$-Alkyl, $C_3$-$C_{10}$-Cycloalkyl oder $C_6$-$C_{15}$-Aryl sein kann und

Z für X oder

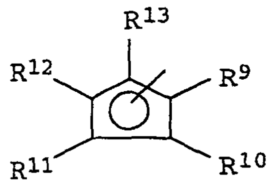

steht,

wobei die Reste

$R^9$ bis $R^{13}$ Wasserstoff, $C_1$-$C_{10}$-Alkyl, 5- bis 7-gliedriges Cycloalkyl, das seinerseits durch $C_1$-$C_{10}$-Alkyl substituiert sein kann, $C_6$-$C_{15}$-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder $Si(R^{14})_3$ mit

$R^{14}$ $C_1$-$C_{10}$-Alkyl, $C_3$-$C_{10}$-Cycloalkyl oder $C_6$-$C_{15}$-Aryl bedeuten,

oder wobei die Reste $R^4$ und Z gemeinsam eine Gruppierung -$R^{15}$-A-bilden, in der

$R^{15}$

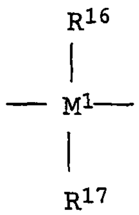 , 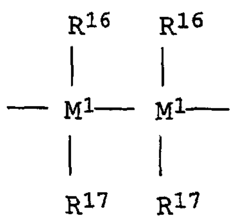 , 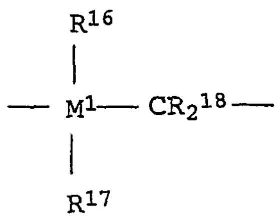 ,

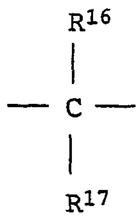 , 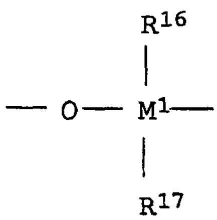 , 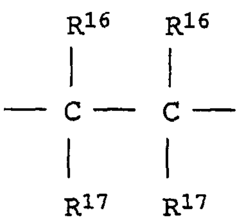 ,

= $BR^{16}$, = $AlR^{16}$, -Ge-, -Sn-, -O-, -S-, = SO, = $SO_2$, = $NR^{16}$, = CO, = $PR^{16}$ oder = $P(O)R^{16}$ ist, wobei

$R^{16}$, $R^{17}$ und $R^{18}$ gleich oder verschieden sind und jeweils ein Wasserstoffatom, ein Halogenatom, eine

$C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und

$M^1$ Silicium, Germanium oder Zinn ist,

A —O—, —S—,$NR^{19}$ oder $PR^{19}$ bedeuten, mit

$R^{19}$ $C_1$-$C_{10}$-Alkyl, $C_6$-$C_{15}$-Aryl, $C_3$-$C_{10}$-Cycloalkyl, $C_7$-$C_{18}$-Alkylaryl oder $Si(R^{20})_3$,

$R^{20}$ Wasserstoff, $C_1$-$C_{10}$-Alkyl, $C_6$-$C_{15}$-Aryl, das seinerseits mit $C_1$-$C_4$-Alkylgruppen substituiert sein kann oder $C_3$-$C_{10}$-Cycloalkyl

oder wobei die Reste $R^4$ und $R^{12}$ gemeinsam eine Gruppierung $-R^{15}$-bilden.

Bevorzugt sind die Reste X in der allgemeinen Formel (I) gleich.
Von den Metallocenkomplexen der allgemeinen Formel (I) sind

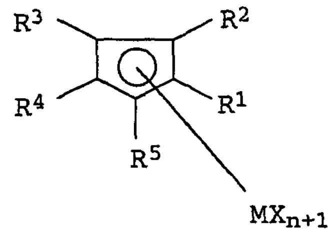

(Ia),

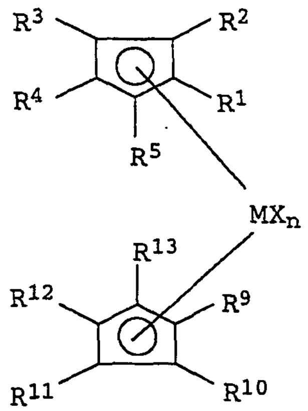

(Ib),

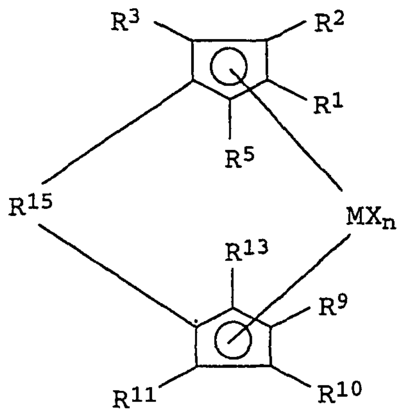

(Ic)

und

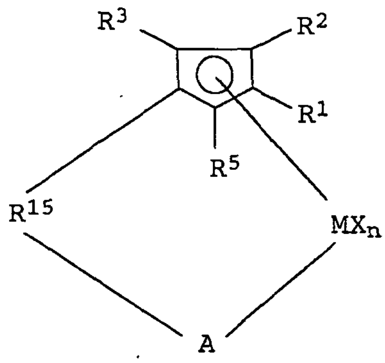

(Id)

bevorzugt.

Von den Verbindungen der Formel (Ia) sind insbesondere diejenigen bevorzugt, in denen

M Titan, Zirkonium oder Hafnium,

X Chlor, $C_1$-$C_4$-Alkyl oder Phenyl,

n die Zahl 2 und

$R^1$ bis $R^5$ Wasserstoff oder $C_1$-$C_4$-Alkyl bedeuten.

Von den Verbindungen der Formel (Ib) sind als bevorzugt diejenigen zu nennen, bei denen

M für Titan, Zirkonium oder Hafnium steht,

X Chlor, $C_1$-$C_4$-Alkyl oder Phenyl,

n die Zahl 2,

$R^1$ bis $R^5$ Wasserstoff, $C_1$-$C_4$-Alkyl oder $Si(R^8)_3$ und

$R^9$ bis $R^{13}$ Wasserstoff, $C_1$-$C_4$-Alkyl oder $Si(R^{14})_3$ bedeuten.

Insbesondere sind die Verbindungen der Formel (Ib) geeignet, in denen die Cyclopentadienylreste gleich sind.

Beispiele für besonders geeignete Verbindungen sind u.a.:

Bis(cyclopentadienyl)zirkoniumdichlorid,

Bis(pentamethylcyclopentadienyl)zirkoniumdichlorid,
Bis(methylcyclopentadienyl)zirkoniumdichlorid,
Bis(ethylcyclopentadienyl)zirkoniumdichlorid,
Bis (n-butylcyclopentadienyl) zirkoniumdichlorid und
Bis(trimethylsilylcyclopentadienyl)zirkoniumdichlorid
sowie die entsprechenden Dimethylzirkoniumverbindungen.

Von den Verbindungen der Formel (Ic) sind diejenigen besonders geeignet, in denen

$R^1$ und $R^9$ gleich sind und für Wasserstoff oder $C_1$-$C_{10}$-Alkylgruppen stehen,

$R^5$ und $R^{13}$ gleich sind und für Wasserstoff, eine Methyl-, Ethyl-, iso-Propyl- oder tert.-Butylgruppe stehen,

$R^3$ und $R^{11}$ $C_1$-$C_4$-Alkyl und

$R^2$ und $R^{10}$ Wasserstoff bedeuten

oder
zwei benachbarte Reste $R^2$ und $R^3$ sowie $R^{10}$ und $R^{11}$ gemeinsam für 4 bis 12 C-Atome aufweisende gesättigte oder ungesättigte cyclische Gruppen stehen,

$R^{15}$ für

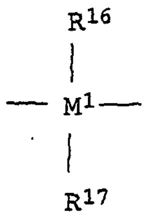

oder

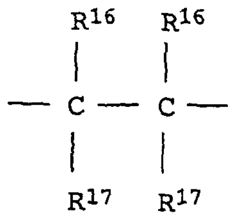

steht,

M für Titan, Zirkonium oder Hafnium und

X für Chlor, $C_1$-$C_4$-Alkyl oder Phenyl stehen.

Beispiele für besonders geeignete Komplexverbindungen (Ic) sind u.a.
Dimethylsilandiylbis(cyclopentadienyl)zirkoniumdichlorid,
Dimethylsilandiylbis(indenyl)zirkoniumdichlorid,
Dimethylsilandiylbis (tetrahydroindenyl) zirkoniumdichlorid, Ethylenbis(cyclopentadienyl)zirkoniumdichlorid,
Ethylenbis (indenyl) zirkoniumdichlorid,
Ethylenbis (tetrahydroindenyl) zirkoniumdichlorid,
Tetramethylethylen-9-fluorenylcyclopentadienylzirkoniumdichlorid,
Dimethylsilandiylbis (3-tert.butyl-5-methylcyclopentadienyl)-zirkoniumdichlorid,
Dimethylsilandiylbis (3-tert.butyl-5-ethylcyclopentadienyl)-zirkoniumdichlorid,
Dimethylsilandiylbis (2-methylihdenyl) zirkoniumdichlorid,
Dimethylsilandiylbis (2-isopropylindenyl) zirkoniumdichlorid,
Dimethylsilandiylbis (2-tert.butylindenyl) zirkoniumdichlorid,
Diethylsilandiylbis(2-methylindenyl)zirkoniumdibromid,
Dimethylsilandiylbis(3-methyl-5-methylcyclopentadienyl)-zirkoniumdichlorid,
Dimethylsilandiylbis(3-ethyl-5-isopropylcyclopentadienyl)-zirkoniumdichlorid,
Dimethylsilandiylbis (2-ethylindenyl) zirkoniumdichlorid,
Dimethylsilandiylbis(2-methyl-4,5-benzindenyl)zirkoniumdichlorid
Dimethylsilandiylbis(2-ethyl-4,5-benzindenyl)zirkoniumdichlorid
Methylphenylsilandiylbis(2-methyl-4,5-benzindenyl)-zirkoniumdichlorid,
Methylphenylsilandiylbis(2-ethyl-4,5-benzindenyl)-zirkoniumdichlorid,

Diphenylsilandiylbis(2-methyl-4,5-benzindenyl)zirkoniumdichlorid, Diphenylsilandiylbis(2-ethyl-4,5-benzindenyl)zirkoniumdichlorid und Diphenylsilandiylbis(2-methylindenyl)hafniumdichlorid sowie die entsprechenden Dimethylzirkoniumverbindungen.

Weitere Beispiele für geeignete Komplexverbindungen sind u.a. Dimethylsilandiylbis(2-methyl-4-phenylindenyl)zirkoniumdichlorid, Dimethylsilandiylbis(2-methyl-4-naphthylindenyl)zirkoniumdichlorid, Dimethylsilandiylbis(2-methyl-4-isopropylindenyl)zirkoniumdichlorid, Dimethylsilandiylbis(2-methyl-4,6-diisopropylindenyl)zirkoniumdichlorid, Dimethylsilandiylbis (2-methyl-4- [4'-tert.butylphenyl]indenyl)-zirkoniumdichlorid, Dimethylsilandiylbis (2-ethyl-4-[4'-tert.butylphenyl] indenyl)-zirkoniumdichlorid, Dimethylsilandiylbis (2-propyl-4-[4'-tert.butylphenyl] indenyl) - zirkoniumdichlorid und Dimethylsilandiyl(2-isopropyl-4-[4'-tert.butylphenyl]indenyl)-(2-methyl-4[4'-tert.butylphenyl]indenyl)zirkoniumdichlorid sowie die entsprechenden Dimethylzirkoniumverbindungen.

Bei den Verbindungen der allgemeinen Formel (Id) sind als besonders geeignet diejenigen zu nennen, in denen

M für Titan oder Zirkonium,

X für Chlor, $C_1$-$C_4$-Alkyl oder Phenyl stehen,

$R^{15}$ für

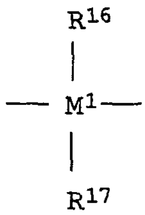

oder

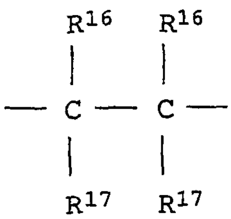

steht,

A für — O — , —S— ,$NR^{19}$

und

$R^1$ bis $R^3$ und $R^5$ für Wasserstoff, $C_1$-$C_{10}$-Alkyl, $C_3$-$C_{10}$-Cycloalkyl,$C_6$-$C_{15}$-Aryl oder Si $(R^8)_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Komponente A) können auch Mischungen verschiedener Metallocenkomplexe eingesetzt werden.

Weiterhin enthalten die Metallocenkatalysatoren als Komponente B) mindestens eine metalloceniumionenbildende Verbindung.

Geeignete metalloceniumionenbildende Verbindungen B) sind beispielsweise starke, neutrale Lewissäuren, ionische Verbindungen mit lewissauren Kationen oder ionische Verbindungen mit Brönsted-Säuren als Kationen.

Als starke, neutrale Lewissäuren sind Verbindungen der allgemeinen Formel (II)

$$M^2X^1X^2X^3 \qquad (II)$$

bevorzugt, in der

$M^2$ ein Element der III. Hauptgruppe des Periodensystems bedeutet, insbesondere B, Al oder Ga, vor-

zugsweise B,

$X^1$, $X^2$ und $X^3$ für Wasserstoff, $C_1$-$C_{10}$-Alkyl, $C_6$-$C_{15}$-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel (II), in der $X^1$, $X^2$ und $X^3$ gleich sind, vorzugsweise Tris(pentafluorphenyl)boran.

Als ionische Verbindungen mit lewissauren Kationen sind Verbindungen der allgemeinen Formel (III)

$$[\,(Y^{a+})\,Q_1Q_2...Q_z]^{\,d+} \qquad \text{(III)}$$

geeignet, in denen

Y ein Element der I. bis VI. Hauptgruppe oder der I. bis VIII. Nebengruppe des Periodensystems bedeutet,

$Q_1$ bis $Q_z$ für einfach negativ geladene Reste wie $C_1$-$C_{28}$-Alkyl, $C_6$-$C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_3$-$C_{10}$-Cycloalkyl, welches gegebenenfalls mit $C_1$-$C_{10}$-Alkylgruppen substituiert sein kann, Halogen, $C_1$-$C_{28}$-Alkoxy, $C_6$-$C_{15}$-Aryloxy, Silyl- oder Mercaptylgruppen

a für ganze Zahlen von 1 bis 6 und

z für ganze Zahlen von 0 bis 5 steht,

d der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethyl-anilinium.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 10 Äquivalente, bezogen auf den Metallocenkomplex A).

Besonders geeignet als metalloceniumionenbildende Verbindung B) sind offenkettige oder cyclische Alumoxanverbindungen der allgemeinen Formeln (IV) oder (V)

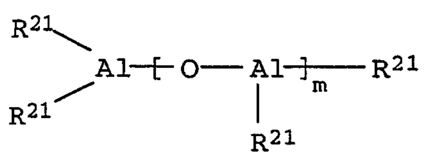

(IV)

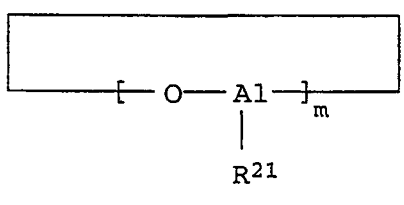

(V)

wobei

$R^{21}$ eine $C_1$-$C_4$-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.
In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.
Es hat sich als vorteilhaft erwiesen, die Metallocenkomplexe A) und die oligomeren Alumoxanverbindungen der allgemeinen Formeln (IV) oder (V) in solchen Mengen zu verwenden, daß das atomare Verhältnis zwischen Aluminium aus den oligomeren Alumoxanverbindungen und dem Übergangsmetall aus den Metallocenkomplexen im Bereich von 10:1 bis $10^6$:1, insbesondere im Bereich von 10:1 bis $10^4$:1, liegt.
Weiterhin können als Komponente B) anstelle der Alumoxanverbindungen der allgemeinen Formeln (IV) oder (V) Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.
Geeignete metalloceniumionenbildende Verbindungen B) sind auch die in der WO 99/06414 offenbarten Bor-Aluminium-Verbindungen wie beispielsweise Di-[bis(pentafluorphenylboroxy)]methylalan. Die Bor-Aluminium-Verbindungen können auch abgeschiedenen auf einen organischen oder anorganischen Träger eingesetzt werden.
Vorzugsweise werden sowohl die Metallocenkomplexe A) als auch die metalloceniumionenbildende Verbindungen B) in Lösung eingesetzt, wobei aromatische Kohlenwasserstoffe mit 6 bis 20 C-Atomen, insbesondere Xylole und Toluol, besonders bevorzugt sind.
Geeignete Metallocenkatalysatoren können als weitere Komponente C) zusätzlich noch eine Metallverbindung der allgemeinen Formel (VI)

$$M^3\,(R^{22})_r(R^{23})_s(R^{24})_t \qquad (VI)$$

in der

| | |
|---|---|
| $M^3$ | ein Alkali-, ein Erdalkalimetall oder ein Metall der III. Hauptgruppe des Periodensystems, d.h. Bor, Aluminium, Gallium, Indium oder Thallium bedeutet, |
| $R^{22}$ | Wasserstoff, $C_1$-$C_{10}$-Alkyl, $C_6$-$C_{15}$-Aryl, Alkylaryl oder Arylalkyl mit jeweils 1 bis 10 C-Atom im Alkylrest und 6 bis 20 C-Atomen im Arylrest, |
| $R^{23}$ und $R^{24}$ | Wasserstoff, Halogen, $C_1$-$C_{10}$-Alkyl, $C_6$-$C_{15}$-Aryl, Alkylaryl, Arylalkyl oder Alkoxy mit jeweils 1 bis 10 C-Atomen im Alkylrest und 6 bis 20 C-Atomen im Arylrest, |
| r | eine ganze Zahl von 1 bis 3 |

und

s und t ganze Zahlen von 0 bis 2 bedeuten, wobei die Summe r+s+t der Wertigkeit von $M^3$ entspricht,

enthalten.
Von den Metallverbindungen der allgemeinen Formel (VI) sind diejenigen bevorzugt, in denen

| | |
|---|---|
| $M^3$ | Lithium, Magnesium oder Aluminium bedeutet und |
| $R^{23}$ und $R^{24}$ | für $C_1$-$C_{10}$-Alkyl stehen. |

Besonders bevorzugte Metallverbindungen der Formel (VI) sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.
Wenn eine Metallverbindung C) eingesetzt wird, ist sie bevorzugt in einer solchen Menge im Katalysatorsystem enthalten, daß das molare Verhältnis von $M^3$ aus Formel (VI) zu Übergangsmetall M aus Formel (I) von 800:1 bis 1:1, insbesondere 500:1 bis 50:1, beträgt.
Die Metallocenkomplexe A) können auch auf einem Trägermaterial eingesetzt werden.
Als Trägermaterialien werden vorzugsweise feinteilige Träger eingesetzt, die im allgemeinen einen Teilchendurchmesser im Bereich von 1 bis 300 μm aufweisen, insbesondere von 20 bis 90 μm. Geeignete Trägermaterialien sind beispielsweise anorganische Oxide des Siliciums, des Aluminiums, des Titans oder eines der Metalle der I. oder II. Hauptgruppe des Periodensystems oder Mischungen dieser Oxide, von denen außer Aluminiumoxid oder Magnesiumoxid oder einem Schichtsilikat insbesondere Kieselgel bevorzugt ist.

Der Träger kann einer thermischen Behandlung z.B. zur Entfernung von adsorbiertem Wasser unterzogen werden, wobei eine solche Behandlung in der Regel bei Temperaturen im Bereich von 80 bis 200°C, vorzugsweise von 100 bis 150°C, durchgeführt wird, oder er kann calciniert werden. Der Träger kann auch chemisch behandelt werden, wobei in der Regel übliche Trocknungsmittel wie Metallalkyle, bevorzugt Aluminiumalkyle, Chlorsilane oder $SiCl_4$ zum Einsatz kommen.

Geeignete Träger sind auch feinteilige Polyolefine, beispielsweise feinteiliges Polypropylen.

Die Metallocenkatalysatorsysteme können auch mit Ziegler-Katalysatoren in Gegenwart oder in Abwesenheit eines zu polymerisierenden Monomeren gemischt und in der Olefinpolymerisation verwendet werden.

Die Katalysatoren können auch, beispielsweise in Suspension oder in bulk-Fahrweise, vorpolymerisiert oder voraktiviert sein.

Die erfindungsgemäßen teilkristallinen Propylenpolymerisat-Zusammensetzungen weisen eine Schmelztemperatur $T_M$ auf, die im Bereich von 65°C bis 170°C, bevorzugt im Bereich von 135°C bis 165°C und insbesondere von 140°C bis 160°C liegt.

Unter der Schmelztemperatur $T_M$ ist hierbei die Temperatur zu verstehen, bei der die durch Differential Scanning Calorimetry (DSC) nach ISO-Norm 3146 durch Aufheizen mit einer Heizgeschwindigkeit von 20°C/min einer vorher aufgeschmolzenen Probe erhaltenen Kurve der Enthalpie gegen die Temperatur das Maximum aufweist. Die DSC-Messung wird dabei üblicherweise so durchgeführt, daß man zunächst die Probe mit einer Aufheizrate von 20°C/min bis etwa 40°C über die Schmelztemperatur erwärmt, die Probe dann mit einer Kühlrate von 20°C/min dynamisch kristallisieren läßt und bei einem zweiten Aufheizen mit einer Aufheizrate von 20°C/min die Schmelztemperatur $T_M$ bestimmt.

Die erfindungsgemäßen teilkristallinen Propylenpolymerisat-Zusammensetzungen zeichnen sich dadurch aus, daß sie

von 65 bis 85 Gew.-%, bevorzugt 70 bis 80 Gew.-% einer Hauptkomponente A,
von 10 bis 35 Gew.-%, bevorzugt 10 bis 25 Gew.-% einer Nebenkomponente B und
von 0 bis 25 Gew.-%, bevorzugt 5 bis 25 Gew.-% und insbesondere 10 bis 20 Gew.-% einer Nebenkomponente C aufweisen, wobei sich die Komponenten A, B und C durch ihre Stereospezifität und ihre Molmasse unterscheiden.

Zur Bestimmung der Anteile der Komponenten A, B und C an der teilkristallinen Propylenpolymerisat-Zusammensetzungen führt man erfindungsgemäß eine Fraktionierung mittels TREF (Temperature Rising Elution Fractionation) durch und mißt dann die Molmassenverteilung aller Fraktionen durch Gelpermeationschromatographie (GPC).

GPC und TREF sind Methoden, mittels denen Polymerproben anhand unterschiedlicher physikalischer Eigenschaften aufgetrennt werden können. Während die GPC Polymerketten aufgrund ihrer Größe fraktioniert, erfolgt die Trennung bei der TREF nach der Kristallisierbarkeit der Polymermoleküle. Das Prinzip der "Temperature rising elution fractionation" wurde beispielsweise ausführlich von L. Wild, Advances in Polymer Sciences 98, 1 - 47 (1990) beschrieben. Hierbei wird eine Polymerprobe bei erhöhter Temperatur in einem Lösungsmittel gelöst, wobei die Konzentration der Lösung kleiner als 2 Gew.-% sein sollte. Die Polymerlösung wird nun sehr langsam (ca. 0,1°C/min) abgekühlt. Zuerst fallen dann die Polymermoleküle aus, die sehr gut kristallisieren und später Moleküle mit schlechteren Kristallisationseigenschaften. In dem Lösungsmittel entstehen somit Polymerpartikel, bei denen die Kristallisierbarkeit der Moleküle, aus denen sie bestehen, von innen nach außen abnimmt. Nach dem Abkühlen folgt die eigentliche Fraktionierung durch Aufheizen der Polymersuspension. Dabei werden zuerst bei relativ niedriger Temperatur die schlecht kristallisierenden Moleküle, die sich am äußeren Rand der Polymerpartikel befinden, aufgelöst und mit dem Lösungsmittel, in dem sie gelöst sind, abgetrennt. Bei höherer Temperatur folgen die besser kristallisierenden Polymerketten.

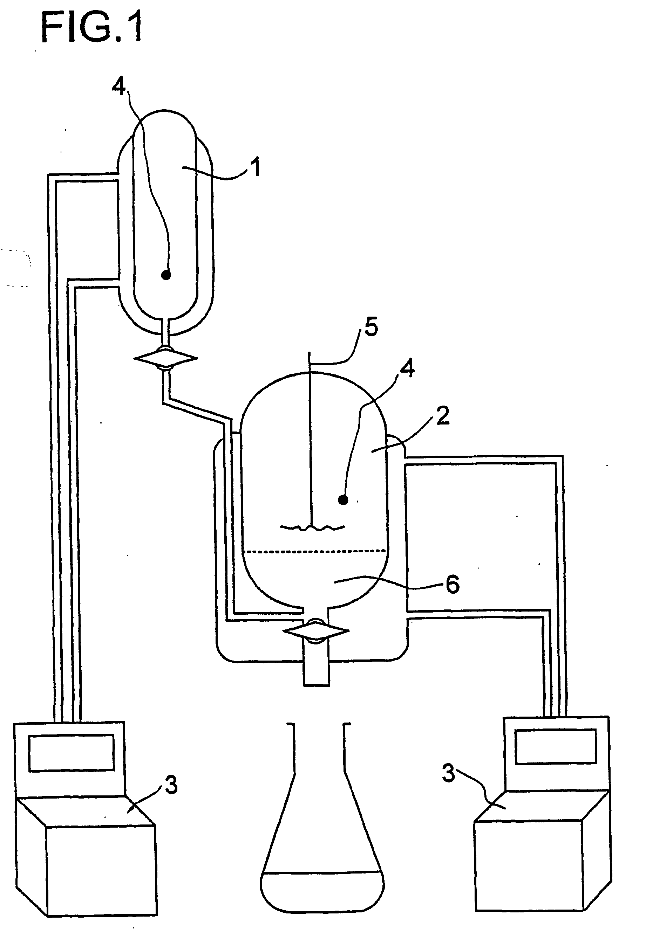

Als besonders geeignet zur Durchführung einer TREF hat sich die in Fig. 1 schematisch dargestellte Apparatur erwiesen. Diese besteht aus einem temperierbaren vorratsgefäß (1), einem temperierbaren Elutionsgefäß (2), zwei Thermostaten (3) (beispielsweise Typ HC5 der Fa. Julabo), zwei Temperaturfühlern (4) und einem leistungsfähigen Mischer (5), mit dem die Polymersuspension durchmischt wird. Im unteren Teil des Elutionsgefäßes befindet sich durch ein Drahtnetz abgetrennte Glaswolle (6), die verhindert, daß beim Ablassen von Polymerlösungen ungelöste Polymerpartikel ausgetragen werden.

Um die teilkristallinen Propylenpolymerisat-Zusammensetzungen erfindungsgemäß zu charakterisieren, wird zunächst das Polymerisat in Xylol gelöst. Prinzipiell können hierbei alle Xylol-Isomere, Isomerenmischungen oder Isomerenmischungen mit Anteilen von Ethylbenzol verwendet werden, wobei aus wirtschaftlichen Erwägungen Isomermischungen bevorzugt sind. Allerdings ist es vorteilhaft weder reines p—Xylol noch Isomerenmischungen mit einem Anteil an p-Xylol von mehr als etwa 50 Gew.-% einzusetzen, da p-Xylol einen Festpunkt bei etwa 20°C besitzt.

Die Polymerprobe wird zum Lösen beispielsweise zusammen mit dem Lösungsmittel in ein Glasgefäß mit Magnetrührstab und aufgesetztem Rückflußkühler gegeben und das Glasgefäß danach in einem Temperierbad unter Rühren bis zum vollständigen Auflösen des Polymers erhitzt. Die Polymerlösung wird anschließend, z.B. durch Absenken des Glasgefäßes in das vorgeheizte Ölbad eines Thermostaten, mit einer Abkühlrate von 10°C/h bis auf Raumtemperatur gekühlt. Das definierte Abkühlen kann man durch die entsprechende Programmierung eines mit dem Thermostaten verbundenen Programmgebers erreichen. Üblicherweise werden für jede TREF-Analyse 5 g Propylenpolymerisat in

400 ml Xylol gelöst.

Die durch das definierte Auskristallisieren entstandene Polymersuspension wird in das Elutionsgefäßes (2) der in Fig. 1 gezeigten Apparatur überführt, die Temperatur auf $(T_M/2)+7,5°C$ erwärmt und die Polymerkristalle bei dieser Temperatur unter heftiger Durchmischung 15 Minuten extrahiert. Die Polymerlösung wird dann abgelassen, während die Kristalle im Extraktor zurückbleiben. Das gelöste Polymer wird vorzugsweise in kaltem Aceton (Temperatur < 0°C) ausgefällt, abfiltriert und 4 bis 5 Stunden bei 100°C im Vakuum getrocknet.

Anschließend werden 400 ml Xylol, das auf die nächst höhere der Temperaturen 70°C, 75°C, 80°C, 85°C, 90°C, 94°C, 98°C, 102°C, 107°C, 112°C, 117°C, 122°C und 125°C temperiert ist, den Polymerkristallen im Elutionsgefäß (2) zugegeben. Es wird wiederum 15 Minuten bei dieser nächst höheren Temperatur durchmischt. Hierbei gehen die im Temperaturintervall zwischen dieser Elutionstemperatur und der vorhergehenden Elutionstemperatur löslichen Anteile der teilkristallinen Propylenpolymerisat-Zusammensetzung in Lösung. Die entstandene Lösung wird dann abgelassen, während die Kristalle im Extraktor zurückbleiben.

Dieses Prozedere wird so lange wiederholt, bis alle Polymerkristalle in Lösung gegangen sind. Bei allen bisher untersuchen Polypropylenen war dies spätestens bei der Temperatur 125°C erreicht.

Die gelösten Polymere der einzelnen Fraktionen werden vorzugsweise in kaltem Aceton (Temperatur < 0°C) ausgefällt, abfiltriert und 4 bis 5 Stunden bei 100°C im Vakuum getrocknet.

Da bei der Fraktionierung einer Polymerisat-Zusammensetzung immer gewisse, wenn auch geringfügige Verluste auftreten, ist in der Regel die Summe der Mengen der Fraktionen niedriger als als die eingewogene Menge an Polymerisat. Solange mindestens 96 Gew.-% der eingewogene Menge des Propylenpolymerisat-Zusammensetzung in den Fraktionen wiedergefunden wird, ist dies unbeachtlich. Sollte der Verlust jedoch höher sein, muß die Fraktionierung wiederholt werden.

Weiterhin ist es nicht möglich, mit extrem kleinen Probemengen zuverlässig die Molmassenverteilung zu bestimmen. Um Fehler zu minimieren, ist die weitere Auswertung deshalb so durchzuführen, daß nur solche Fraktionen bei der Berechnung der Komponenten A, B und C berücksichtigt werden, deren Massenanteil an der eingewogenen Polymerprobe mindestens 1 Gew.-% beträgt. Von diesen Fraktionen wird die Molmassenverteilung durch Gelpermeationschromatographie (GPC) in 1,2,4-Trichlorbenzol bei 145°C bestimmt, wobei die Kalibrierung der GPC mittels Polypropylenstandards mit Molmassen von 100 bis $10^7$ g/mol erfolgt.

Entsprechend der Temperatur, bei der die jeweilige Fraktion eluiert wurde, d.h. der Temperatur bei der die Polymerketten entsprechend der des Temperaturfolge 70°C, 75°C, 80°C, 85°C, 90°C, 94°C, 98°C, 102°C, 107°C, 112°C, 117°C, 122°C in Lösung gegangen sind, und der mittleren Molmasse $M_n$ (Zahlenmittel) der jeweilige Fraktion lassen sich die Fraktionen nun den einzelnen Komponenten A, B und C zuordnen.

Die Hauptkomponente A wird von allen zu berücksichtigenden Fraktionen gebildet, die bei einer Temperatur oberhalb von $(T_M/2)+7,5°C$ eluiert werden und eine mittlere Molmasse $M_n$ (Zahlenmittel) ≥ 120 000 g/mol aufweisen.

Die Nebenkomponente B wird von der Fraktion gebildet, die bei der Temperatur $(T_M/2)+7,5°C$ eluiert wird. Wenn der Anteil der bei der Temperatur $(T_M/2)+7,5°C$ eluierten Fraktion an der gesamten Propylenpolymerisat-Zusammensetzung kleiner 1 Gew.-% ist, ist somit der Anteil der Nebenkomponente B entsprechend der oben gegebenen Definition der zu berücksichtigenden Fraktionen gleich 0 Gew.-%.

Die Nebenkomponente C wird von allen zu berücksichtigenden Fraktionen gebildet, die bei einer Temperatur oberhalb von $(T_M/2)+7,5°C$ eluiert werden und eine mittlere Molmasse $M_n$ (Zahlenmittel) < 120 000 g/mol aufweisen.

Bedingt durch die Verluste bei.der TREF und dadurch, daß Fraktionen, die einem Anteil an der Propylenpolymerisat-Zusammensetzung von weniger als 1 Gew.-% haben, nicht weiter berücksichtigt werden, ist die Summe der experimentell erhaltene Mengen an Komponenten A, B und C geringer als die bei der Fraktionierung eingewogene Menge an Polymerisat, auf die bezogen wird. Da die Anteile der Komponenten A, B und C üblicherweise in Gew.-% angeben werden, ergibt sich somit für die Summe der Anteile der Komponenten A, B und C eine Differenz zu 100 Gew.-%, die man als Z bezeichnen und entsprechend der Formel

$$Z = 100 \text{ Gew.-\%} - (A + B + C)$$

quantifizieren kann, wobei A, B und C das Verhältnis der gefundenen Mengen der Komponenten A, B und C zu der eingewogenen Menge der Propylenpolymerisat-Zusammensetzung in Gew.-% bedeutet und Z ebenfalls in Gew.-% angegeben wird.

Überraschenderweise lassen sich gerade die teilkristallinen Propylenpolymerisat -Zusammensetzungen, bei denen mindestens 20 Gew.-% der Zusammensetzung durch Polymerisation mittels Metallocenkatalysatoren hergestellt wurden, besonders gut zu BOPP-Folien verarbeiten und besitzen ein besonders breites Verarbeitungsfenster, die die erfindungsgemäßen Anteile der Komponenten A, B und C aufweisen. Zur Deutung der guten Eigenschaften der erfindungsgemäßen Propylenpolymerisat-Zusammensetzungen kann man annehmen, daß insbesondere ein hoher Gehalt

an Hauptkomponente A eine hohe Steifigkeit der Folien bewirkt. Der Gehalt an Nebenkomponente B beeinflußt die Geschwindigkeit der Verarbeitung und der Gehalt an Nebenkomponente C ist für ein breites Temperaturfenster verantwortlich.

Wesentlich für die Eigenschaften der erfindungsgemäßen Propylenpolymerisat-Zusammensetzung ist deren Anteil an den Komponenten A, B und C. Bedingt durch die chemische Natur der erfindungsgemäß zur Herstellung der Propylenpolymerisat-Zusammensetzung eingesetzten Metallocenkatalysatoren handelt es sich bei der Zusammensetzung üblicherweise um eine Mischung aus unter unterschiedlichen Polymerisationsbedingungen hergestellten Polymerisaten. Das Verfahren, nach dem diese Mischung hergestellt wurde, ist an sich nicht kritisch.

Beispielsweise ist es möglich, zwei oder mehrere Ausgangspolymerisate getrennt zu polymerisieren und diese dann mit geeigneten Mischeinrichtungen wie Schnecken- oder Scheibenextrudern, Knetern oder Walzwerken zu mischen.

Vorzugsweise werden die Propylenpolymerisat-Zusammensetzungen jedoch nicht getrennt polymerisiert. Eine Möglichkeit besteht dann darin, daß eine Mischung von zwei oder mehreren verschiedenen Metallocenen eingesetzt wird, die unter den eingestellten Polymerisationsbedingungen unterschiedliche Polypropylene liefern. In der Regel bildet dann ein Metallocen die Komponente A und ein anderes die Komponenten B und C oder ein Metallocen bildet die Komponente A, ein anderes die Komponente B und ein weiteres die Komponente C. Eine zweite Möglichkeit besteht darin, nur einen Katalysator zu verwenden, jedoch unter so unterschiedlichen Bedingungen in verschiedenen Reaktoren, beispielsweise einer Reaktorkaskade, zu polymerisieren, daß letztendlich die gewünschte Zusammensetzung resultiert.

Die Herstellung der Bestandteile der erfindungsgemäßen Propylenpolymerisat-Zusammensetzung oder der gesamten Propylenpolymerisat-Zusammensetzung kann in bekannter Weise in Masse, in Suspension oder in der Gasphase in den üblichen, für die Polymerisation von Propylen verwendeten Reaktoren entweder absatzweise oder bevorzugt kontinuierlich, ein- oder mehrstufig erfolgen. In der Regel werden die Polymerisationen bei Temperaturen im Bereich von 20 bis 150°C und Drücken im Bereich von 1 bis 100 bar mit mittleren Verweilzeiten von 0,5 bis 5 Stunden durchgeführt. Bevorzugt sind dabei Temperaturen von 60 bis 90°C, Drücke von 20 bis 35 bar und mittlere Verweilzeiten von 0,5 bis 3 Stunden.

Die erfindungsgemäße teilkristalline Propylenpolymerisat-Zusammensetzung weist vorzugsweise Molmassen (Gewichtsmittel $M_w$) zwischen 20 000 und 900 000 g/mol auf. Ihre Schmelze-Fließraten, bei 230°C und unter einem Gewicht von 2,16 kg nach ISO 1133, liegen im Bereich von 0,1 bis 100 g/10 min, vorzugsweise im Bereich von 0,5 bis 50 g/10 min und insbesondere im Bereich von 1 bis 12 g/10 min.

Üblicherweise werden der erfindungsgemäßen teilkristallinen Propylenpolymerisat-Zusammensetzung vor der Anwendung übliche Additive wie Stabilisatoren, Gleit- und Entformungsmittel, Füllstoffe, Nukleierungsmittel, Antistatika, Weichmacher, Farbstoffe, Pigmente oder Flammschutzmittel in üblichen Mengen zugesetzt. In der Regel werden diese bei der Granulierung des pulverförmig anfallenden Polymerisationsprodukts in das Polymerisat eingearbeitet.

Übliche Stabilisatoren sind Antioxidantien wie sterisch gehinderte Phenole, Verarbeitungsstabilisatoren wie Phosphite oder Phosphonite, Säurefänger wie Calcium- oder Zinkstearat oder Dihydrotalcit, sterisch gehinderte Amine oder auch UV-Stabilisatoren. Im allgemeinen enthält die erfindungsgemäße Propylenpolymerisat-Zusammensetzung einen oder mehrere der Stabilisatoren in Mengen bis zu 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew-% eingesetzt werden.

Als Füllstoffe für die Propylenpolymerisat-Zusammensetzung kommen z.B. Talkum, Kreide oder Glasfasern in Betracht, wobei hier Mengen bis 50 Gew.-% verwendet werden können.

Geeignete Nukleierungsmittel sind beispielsweise anorganische Zusatzstoffe wie Talkum, Kieselsäure oder Kaolin, Salze von Mono- oder Polycarbonsäuren wie Natriumbenzoat oder Aluminium-tert.-butylbenzoat, Dibenzylidensorbitol oder dessen $C_1$-$C_8$-alkylsubstituierte Derivate wie Methyl- oder Dimethyldibenzylidensorbitol oder Salze von Diestern der Phosphorsäure wie Natrium-2,2'-methylenbis (4,6,-di-tert.-butylphenyl)phosphat. Der Gehalt der Propylenpolymerisat-Zusammensetzung an Nukleierungsmitteln beträgt in der Regel bis 5 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Die erfindungsgemäße teilkristalline Propylenpolymerisat-Zusammensetzung zeichnet sich durch einen nur sehr geringen Anteil an löslichen Anteilen, eine gute Barrierewirkung, hohe Steifigkeit, Zähigkeit und Transparenz sowie eine gute Verarbeitbarkeit zu biaxial gereckten Polypropylen-Folien aus. Aufgrund dieser guten anwendungstechnischen Eigenschaften eignet sich die erfindungsgemäße teilkristalline Propylenpolymerisat-Zusammensetzung vor allem zur Herstellung von Folien, Fasern oder Formkörpern.

Ein weiterer Gegenstand der Erfindung sind aus der erfindungsgemäßen teilkristallinen Propylenpolymerisat-Zusammensetzung hergestellte biaxial gereckte Folien mit einem Reckverhältnis von mindestens 1:3 in der Längsrichtung und von mindestens 1:5 in der Querrichtung.

Die Herstellung der biaxial gereckten Folien kann durch Schmelzeextrusion der Propylenpolymerisat-Zusammensetzung erfolgen, wobei die ausgetragene Schmelze zunächst auf eine Temperatur von 100 bis 20°C abgekühlt wird, um sie zu verfestigen, und der verfestigte Film dann in der Längsrichtung bei einer Temperatur von 80 bis 150°C mit einem Reckverhältnis von mindestens 1:3 und in der Querrichtung bei einer Temperatur von 120 bis 170°C mit einem Reckverhältnis von mindestens 1:5 gereckt wird.

Hierzu schmilzt man die teilkristalline Propylenpolymerisat-Zusammensetzungen bei Temperaturen von beispielsweise 220 bis 300°C, bevorzugt von 240 bis 280°C, in einem Extruder auf, wobei im Extruder weitere Additive oder Polymerisate zugegeben werden können, und extrudiert die Schmelze durch eine Flachdüse oder eine ringförmige Düse.

Zur Verfestigung wird die erhaltene Folie dann abgekühlt. Bei einer Extrusion durch eine Flachdüse (Breitschlitzdüse) erfolgt die Kühlung in der Regel durch eine oder mehrere Abzugswalzen, die eine Oberflächentemperatur von beispielsweise 10 bis 100°C, vorzugsweise 15 bis 70°C, haben. Bei Einsatz einer ringförmigen Düse wird zum Kühlen des Folienschlauchs meist Luft oder Wasser mit einer Temperatur von 0 bis 40°C eingesetzt.

Die erhaltene Folie wird anschließend längs und quer zur Extrusionsrichtung gereckt, was zu einer Orientierung der Molekülketten führt. Die Reihenfolge des Reckens ist nicht kritisch. Bei der Breitschlitzextrusion wird in der Regel zunächst die Längsreckung mit Hilfe von mehreren, entsprechend dem angestrebten Reckverhältnis unterschiedlich schnell laufenden Walzenpaaren durchgeführt. Anschließend erfolgt die Querreckung mittels einer entsprechenden Kluppenvorrichtung. Ebenso kann die Längs- und Querreckung mittels einer geeigneten Kluppenvorrichtung simultan erfolgen. Beim Einsatz einer ringförmigen Düse erfolgt das Recken in der Regel simultan in beide Richtungen durch Einblasen von Gas in den Folienschlauch.

Vor dem Recken ist es möglich, die Folie auf eine Temperatur von beispielsweise 60 bis 110°C vorzuheizen. Vorzugsweise erfolgt die Längsreckung bei einer Temperatur von 80 bis 150°C, insbesondere 100 bis 130°C, und die Querreckung bei einer Temperatur von 120 bis 190°C, insbesondere 135 bis 180°C. Das Längsreckverhältnis beträgt in der Regel mindestens 1:3, vorzugsweise von 1:4 bis 1:7 und insbesondere von 1:4,5 bis 1:5,5. Das Querreckverhältnis beträgt in der Regel mindestens 1:5, vorzugsweise von 1:6 bis 1:12 und insbesondere von 1:7 bis 1:10.

An die biaxiale Reckung kann sich eine Wärmebehandlung zur Thermofixierung anschließen, bei der die Folie etwa 0,1 bis 10 s bei einer Temperatur von 100 bis 160°C gehalten wird. Anschließend wird die Folie in üblicher Weise von einer Aufwickeleinrichtung aufgewickelt.

Während oder nach der Herstellung der BOPP-Folie können eine oder beide Oberflächen nach einer der bekannten Methoden corona- oder flammbehandelt werden oder bei Bedarf mit einem Metall wie Aluminium bedampft werden.

Es ist auch möglich, daß die erfindungsgemäße teilkristalline Propylenpolymerisat-Zusammensetzung nur eine oder nur einige Schichten einer mehrschichtig aufgebauten biaxial gereckten Folien bilden.

Die aus der erfindungsgemäßen teilkristallinen Propylenpolymerisat-Zusammensetzung hergestellten biaxial gereckten Folien sind insbesondere hervorragend in der Steifigkeit, der Barrierewirkung und der Transparenz.

Beispiele

Zur Charakterisierung der Proben wurden folgende Prüfungen durchgeführt:

Bestimmung des mittleren Teilchendurchmessers:

Zur Bestimmung des mittleren Teilchendurchmessers des Kieselgels wurde durch Coulter-Counter-Analyse nach ASTM Standard D 4438 die Korngrößenverteilung der Kieselgelpartikel ermittelt und daraus der volumenbezogene Mittelwert (Medianwert) berechnet.

Bestimmung des Porenvolumens:

Durch Quecksilber-Porosimetrie nach DIN 66133

Bestimmung der spezifischen Oberfläche:

Durch Stickstoff-Adsorption nach DIN 66131

Bestimmung des Ethylen-Gehalts:

Der Ethylen-Gehalt wurden durch $^{13}C$-NMR-Spektroskopie an Polymergranulat bestimmt.

Bestimmung des Schmelze-Fließrate (MFR):

nach ISO-Norm 1133, bei 230°C und unter einem Gewicht von 2,16 kg.

Bestimmung von $T_M$:

Die Schmelztemperatur $T_M$ wurde durch DSC-Messung nach ISO-Norm 3146 mit einem ersten Aufheizen mit einer Aufheizrate von 20°C pro Minute bis 200°C, einer dynamische Kristallisation mit einer Kühlrate von 20°C pro Minute bis 25°C und einem zweiten Aufheizen mit einer Aufheizrate von 20°C pro Minute wiederum bis 200°C ermittelt. Die Schmelztemperatur $T_M$ ist dann die Temperatur, bei der die beim zweiten Aufheizen gemessene Kurve der Enthalpie gegen die Temperatur das Maximum aufweist.

Fraktionierung durch TREF:

Als Lösungsmittel wurde ein technisches Xylol mit weniger als 0,1 Gew.-% nichtflüchtiger Anteile verwendet, dem zur Stabilisierung 5 Gramm pro Liter 2,6-Di-tert.butyl-4-methylphenol zugesetzt wurde. Für jede Fraktionierung wurden 5 g der Propylenpolymerisat-Zusammensetzung in 400 ml siedendem Xylol gelöst und die Lösung dann linear mit einer Kühlrate von 10°C/h auf 25°C abgekühlt, wobei der Großteil des Polymerisats ausfiel.

Die Kristallsuspension wurde in die in Fig. 1 gezeigte, 500 ml fassende, temperierbare Extraktionsapparatur überführt und auf auf die erste Elutionstemperatur, d.h. die Temperatur ($T_M$/2)+7,5°C, erwärmt. Vor der Messung wurde die gesamte Apparatur mit Stickstoff gespült. Während der Extraktion blieb der Gasraum oberhalb der Extraktionsflüssigkeiten mit Stickstoff überschichtet. Die Polypropylenkristalle wurden bei dieser Temperatur unter heftiger Durchmischung 15 Minuten extrahiert. Anschließend wurde die Polymerlösung abgelassen, während die Polypropylenkristalle im Extraktor zurückblieben. Das gelöste Polymer wurde in kaltem Aceton (Temperatur < 0°C) ausgefällt, abfiltriert und 4 bis 5 Stunden bei 100°C im Vakuum getrocknet.

Der Extraktor wurde nun auf die nächste Elutionstemperatur der Temperaturfolge 70°C, 75°C, 80°C, 85°C, 90°C, 94°C, 98°C, 102°C, 107°C, 112°C, 117°C, 122°C erwärmt und es wurden 400 ml Xylol der selben Temperatur hinzugegeben. Es wurde wiederum 15 Minuten unter heftiger Durchmischung extrahiert, die Polymerlösung abgelassen, das gelöste Polymer in kaltem Aceton ausgefällt, abfiltriert und getrocknet. Diese Schritte wurden so lange wiederholt, bis sich das gesamte Propylenhomopolymerisat gelöst hatte.

Die errechneten Anteile der TREF-Fraktionen beschreiben den Anteil, der sich bei der Extraktion bei der angegebenen Temperatur gelöst hat. Die Gew.-%-Angaben beziehen sich hierbei auf die Einwaage von 5 g, d.h. bedingt durch Wäge- und Filtrationsverluste ergibt die Summe der Fraktionen jeweils nicht ganz 100 Gew-%.

Gelpermeationschromatographie (GPC):

Die Gelpermeationschromatographie (GPC) bei 145°C wurde bei 145°C in 1,2,4-Trichlorbenzol durchgeführt, wobei eine GPC-Apparatur 150C der Fa. Waters zum Einsatz kam. Die Auswertung der Daten erfolgte mit der Software Win-GPC der Fa. HS-Entwicklungsgesellschaft für wissenschaftliche Hard- und Software mbH, Ober-Hilbersheim. Die Kalibrierung der Säulen erfolgte mittels Polypropylenstandards mit Molmassen von 100 bis $10^7$ g/mol.

Es wurden Massenmittel ($M_w$) und Zahlenmittel ($M_n$) der Molmassen der Polymerisate bestimmt. Der Q-Wert ist das Verhältnis von Massenmittel ($M_w$) zu Zahlenmittel ($M_n$).

Bestimmung der Anteile der Komponenten A, B und C:

Mit der zu untersuchenden Propylenpolymerisat-Zusammensetzung wurde eine TREF-Analyse durchgeführt. Bei der weiteren Auswertung wurden alle diejenigen Fraktionen berücksichtigt, deren Massenanteil mehr als 1 Gew. -% betrug. Von allen zu berücksichtigenden Fraktionen wurde die Molmassenverteilung mittels GPC bestimmt.

Der Masseanteil der Nebenkomponente B ist der Masseanteil der Fraktion, die bei der ersten Elutionstemperatur, d.h. der Temperatur ($T_M$/2)+7,5°C, erhalten wurde.

Der Masseanteil der Hauptkomponente A ist der Masseanteil a1ler bei höheren Elutionstemperaturen erhaltenen Fraktionen, deren mittlere Molmasse $M_n$ (Zahlenmittel) ≥ 120 000 g/mol war.

Die bei höheren Temperaturen als ($T_M$/2)+7,5°C erhaltenen Fraktionen mit einer mittleren Molmasse $M_n$ (Zahlenmittel) < 120 000 g/mol bilden zusammen die Nebenkomponente C.

Die Differenz Z quantifiziert gemäß der Formel

$$Z = 100 \text{ Gew.-\%} - (A + B + C)$$

die Anteile der eingewogenen Propylenpolymerisat-Zusammensetzung, die aufgrund der Verluste bei der TREF oder der zu geringen Mengen einzelner Fraktionen nicht bei der Berechnung der Komponenten A, B und C berücksichtigt wurden.

Bestimmung des Verarbeitungsfensters:

Während der Herstellung der BOPP-Folien wurde durch Variation der Recktemperatur der Temperaturbereich festgestellt, innerhalb dem es möglich ist, BOPP-Folien zu erhalten. Dieser Temperaturbereich ist dadurch begrenzt, daß bei höheren Temperaturen aufgrund von Schmelzen der Film reißt und bei niedrigeren Temperaturen aufgrund von Inhomogenitäten wegen unvollständigem Aufschmelzen der Film reißt oder der Film so fest ist, daß er aus der Verstreckvorrichtung rutscht.

Es wurde so vorgegangen, daß mit einer Verarbeitungstemperatur, bei der ein stabiler Lauf gewährleistet war, begonnen wurde. Dann wurde die Recktemperatur in Schritten von 2°C angehoben bis der Film riß. Dabei wurde die nächste Temperatur dann eingestellt, wenn bei einer Temperatur 1000 m Folie ohne Riß produziert werden konnten. Anschließend wurde wiederum mit der Ausgangstemperatur begonnen und die Recktemperatur in Schritten von 2°C abgesenkt bis der Film erneut riß oder aus der Verstreckvorrichtung rutschte.

Bestimmung des Elastizitätsmoduls (Zug-E-Modul):

Aus biaxial gereckten Folien wurden in Längs- und in Querrichtung Streifen mit 15 mm Breite geschnitten, an denen nach ISO-Norm 527-2 bei 23°C Meßtemperatur der Zug-E-Modul bestimmt wurde.

Die Bestimmung der Trübung (Haze) :

Nach ASTM D-1003.

Die Bestimmung der Wasserdampfbarriereeigenschaften

Messung der $H_2O$-Permeabilität nach DIN 53122.

Die Bestimmung der Sauerstoffbarriereeigenschaften

Messung der $O_2$-Permeabilität nach ASTM D3985-81.

Beispiel 1

a) Herstellung des Katalysatorfeststoffs

4000 g feinteiliges, sphärisches Kieselgel ($SiO_2$) mit einem mittleren Teilchendurchmesser von 50 µm, einem Porenvolumen von 1,56 $cm^3$/g, einer spezifischen Oberfläche von 310 $m^2$/g, das zuvor 8 Stunden bei 130 °C und 10 mbar getrocknet wurde, wurde in 20 Liter Heptan suspendiert und mit 8 Liter einer 2 M Lösung von Triisobutylaluminum in Heptan versetzt. Die Zugabe erfolgte so langsam, daß die Temperatur der Suspension stets unterhalb von 40°C verblieb. Anschließend rührte man 2 Stunden, ließ die Suspension absitzen und hob die überstehende Lösung ab. Der Feststoff wurde mit 20 Liter Toluol suspendiert und kurz aufgerührt. Dann ließ man die Suspension wieder absitzen und hob die überstehende Lösung ab. Dieser Vorgang wurde noch zwei mal wiederholt. Der desaktivierte Träger wurde zuletzt in 20 Liter Toluol suspendiert, mit 256,6 g (80 µmol/g $SiO_2$) N,N-dimethylaniliniumtetrakis(pentafluorophenyl) borat versetzt und auf 85°C aufgeheizt. Bei dieser Temperatur wurde die Suspension 30 Minuten gerührt. Danach gab man 50,3 g (20 µmol/g $SiO_2$) rac-Dimethylsilandiylbis(2-methyl-4-phenylindenyl)zirkoniumdichlorid zu. Es wurde dann weitere 90 Minuten bei 85°C gerührt. Hierbei veränderte sich die Farbe der Suspension zunächst von weiß nach türkis und dann nach schwarz-violett. Anschließend wurde der Katalysator am Vakuum bei 85°C getrocknet.

Es wurden ca. 5000 g eines frei fließenden Pulvers erhalten, das 0,15 Gew.-% Zr, 3,2 Gew.-% A1 und 36 Gew.-% Si enthielt.

b) Polymerisation

Die Polymerisation wurde in einer Kaskade aus zwei hintereinander geschalteten vertikal gerührten Gasphasenreaktoren mit einem Nutzvolumen von jeweils 200 l durchgeführt. Beide Reaktoren enthielten ein bewegtes Festbett aus feinteiligem Polymerisat.

In den ersten Gasphasenreaktor wurde gasförmiges Propylen eingeleitet und bei 28 bar und 80°C kontinuierlich polymerisiert. Als Katalysator wurde der in Beispiel 1 a) erhaltenen Feststoff verwendet, wobei die zudosierte Menge an Katalysatorfeststoff so bemessen wurde, daß ein mittlerer Ausstoß der Kaskade von 25 kg Polypropylen pro Stunde aufrecht erhalten wurde. Ebenfalls in den Reaktor dosiert wurden 30 ml einer 2 M Lösung von Triisobutylaluminium in Heptan und 40 g pro Stunde einer 1 Gew.-%igen Lösung von Atmer® 163 (Fa. ICI) in Heptan.

Das im ersten Gasphasenreaktor erhaltene Propylenhomopolymerisat wurde zusammen mit noch aktiven Katalysatorbestandteilen in den zweiten Gasphasenreaktor übergeführt. Dort wurde bei 15 bar und 65°C kontinuierlich ein Gemisch aus Propylen und Ethylen hinzupolymerisiert. Das Partialdruckverhältnis Propylen zu Ethylen betrug 12 : 1. Eine stationäre Konzentration der eingesetzten Monomere im Gasraum wurde dadurch eingestellt, daß man in Abständen von fünf Minuten die Gaszusammensetzung mittels eines Gaschromatographen bestimmte und durch Nachführen der benötigten Monomermengen regelte. Das Verhältnis des Gewichts der in der ersten Polymerisationsstufe umgesetzten Monomere zum dem der in der zweiten Stufe umgesetzten Monomere betrug 4 : 1.

Die Katalysatorproduktivität betrug 5000 g Polypropylen pro Gramm eingesetztem Katalysatorfeststoff.

Bei der Granulierung wurde eine für Propylenpolymerisate übliche Stabilisierung auf Basis von Tetrakis[methylen-(3,5-di-tert.-butylhydroxyhydrocinnamat)]methan und Tris(2,4-di-tert.-butylphenyl)phosphit eingearbeitet. Die erhaltene Propylenpolymerisat-Zusammensetzung besaß eine Schmelztemperatur von 154°C, eine Schmelze-Fließrate von 2,7 g/10 min und enthielt 1,9 Gew.% Ethylen. Die GPC ergab $M_w$ 350000 g/mol, $M_n$ 95000 g/mol und Q (= $M_w/M_n$) 3,7. Durch TREF wurde sie in die in Tabelle 1 wiedergegebenen Fraktionen zerlegt. Die Ausbeute der Fraktionierung, d.h. die Summe der Massenanteile der Fraktionen, betrug 98,7 Gew-%.

Tabelle 1

| Fraktion | Elutionstemperatur [°C] | Massenanteil [Gew.-%] | mittlere Molmasse der Fraktion (Zahlenmittel $M_n$) [g/mol] |
|---|---|---|---|
| 1 | 84,5 | 13,1 | 36500 |
| 2 | 85 | 1,3 | 74800 |
| 3 | 90 | 11,7 | 105100 |
| 4 | 94 | 34,3 | 146300 |
| 5 | 98 | 9,9 | 147900 |
| 6 | 102 | 28,4 | 211000 |

Da die Temperatur ($T_M$/2)+7,5°C der untersuchten Propylenpolymerisat-Zusammensetzung 84,5°C betrug, wurde die erste Fraktion bei dieser Temperatur eluiert. Die Fraktionen 2 und 3 bei den Temperaturen 85 und 90°C entsprechen der Komponente C und die Fraktionen 4 - 6 bei den Temperaturen 94, 98 und 102°C der Komponente A. Es ergab sich somit eine Zusammensetzung aus

Hauptkomponente A: 72,6 Gew.-%
Nebenkomponente B: 13,1 Gew.-% und
Nebenkomponente C: 13,0 Gew.-%.

Die Differenz Z betrug somit 1,3 Gew.-%.

c) Herstellung einer BOPP-Folie

Aus der erhaltenen teilkristallinen Propylenpolymerisat-Zusammensetzung wurde eine biaxial gereckten Folie mit ca. 20 μm Dicke hergestellt. Die Herstellung erfolgte mit einer Pilotanlage der Fa. Brückner Maschinenbau mit einer 30 cm-Breitschlitzdüse. Es wurde mit einem Durchsatz von 150 kg/h gearbeitet. Die extrudierte Folie wurde auf eine Temperatur von 20°C abgekühlt und die verfestigte Folie in der Längsrichtung bei einer Temperatur von 116°C und einem Reckverhältnis von 4,5:1 und in der Querrichtung bei einer Temperatur von 157°C und einem Reckverhältnis von

8:1 gereckt. Die Eigenschaften der hergestellten biaxial gereckten Folie können der nachfolgenden Tabelle 7 entnommen werden.

Vergleichsbeispiel A

a) Herstellung des Katalysatorfeststoffs

Es wurde der in Beispiel 1 a) hergestellte Katalysatorfeststoff verwendet.

b) Polymerisation

Mit dem in Beispiel 1 a) hergestellten Katalysatorfeststoff wurde im ersten Reaktor der auch in Beispiel 1 b) verwendeten Reaktorkaskade unter identischen Reaktionsbedingungen ein Propylenhomopolymerisat hergestellt. Das im ersten Gasphasenreaktor erhaltene Produkt wurde direkt'ausgetragen.

Das erhaltene Polymerisat wurde so wie in Beispiel 1 b) stabilisiert und besaß eine Schmelztemperatur von 155°C und eine Schmelze-Fließrate von 1,7 g/10 min. Die GPC ergab $M_w$ 500000 g/mol, $M_n$ 250000 g/mol und Q (= $M_w/M_n$) 2,0. Durch TREF wurde es in die in Tabelle 2 wiedergegebenen Fraktionen zerlegt. Die Ausbeute der Fraktionierung, d.h. die Summe der Massenanteile der Fraktionen, lag bei 99,4 Gew-%.

Tabelle 2

| Fraktion | Elutionstemperatur [°C] | Massenanteil [Gew.-%] | mittlere Molmasse der Fraktion (Zahlenmittel $M_n$) [g/mol] |
|---|---|---|---|
| 1 | 85 | 0,6 | - |
| 2 | 90 | 5,8 | 137400 |
| 3 | 94 | 3,4 | 131300 |
| 4 | 98 | 5,5 | 140100 |
| 5 | 102 | 75,0 | 284400 |
| 6 | 107 | 9,1 | 196800 |

Da die Temperatur $(T_M/2)$+7,5°C der untersuchten Propylenpolymerisat-Zusammensetzung 85°C betrug, wurde die erste Fraktion bei 85°C eluiert. Da der Massenanteil dieser Fraktion kleiner als 1 Gew.-% war, lag der Gehalt an Komponente B definitionsgemäß bei 0 Gew.-%. Die Fraktionen 2 - 6 bei den Temperaturen bei 90, 94, 98, 102 und 107°C sind jeweils der Komponente A zuzuordnen und somit ergibt sich für die Komponente C ebenfalls 0 Gew.-%. Man erhielt also

| | |
|---|---|
| Hauptkomponente A: | 98,8 Gew.-% |
| Nebenkomponente B: | 0 Gew.-% und |
| Nebenkomponente C: | 0 Gew.-%. |

Die Differenz Z betrug somit 1,2 Gew.-%.

c) Herstellung einer BOPP-Folie

Aus der erhaltenen teilkristallinen Propylenpolymerisat-Zusammensetzung wurde eine biaxial gereckten Folie mit ca. 20 μm Dicke hergestellt. Die Herstellung erfolgte mit einer Pilotanlage der Fa. Brückner Maschinenbau mit einer 30 cm-Breitschlitzdüse. Es wurde mit einem Durchsatz von 150 kg/h gearbeitet. Die extrudierte Folie wurde auf eine Temperatur von 20°C abgekühlt und die verfestigte Folie in der Längsrichtung bei einer Temperatur von 116°C und einem Reckverhältnis von 4,5:1 und in der Querrichtung bei einer Temperatur von 157°C und einem Reckverhältnis von 8:1 gereckt. Die Eigenschaften der hergestellten biaxial gereckten Folie können der nachfolgenden Tabelle 7 entnommen werden.

Beispiel 2

a) Herstellung des Katalysatorfeststoffs

Das in Beispiel 1 a) beschriebene Vorgehen wurde unter gleichen Bedingungen wiederholt. Allerdings wurde anstelle des in Beispiel 1 a) eingesetzten rac-Dimethylsilandiylbis(2-methyl-4-phenylindenyl)zirkoniumdichlorid eine Suspension von 35,2 g (14 μmol/g $SiO_2$) rac-Dimethylsilandiylbis(2-methyl-4-phenylindenyl)zirkoniumdichlorid und 11,3 g (6 μmol/g $SiO_2$) rac-Dimethylsilandiylbis(2-methylindenyl)zirkoniumdichlorid in 1 Liter Toluol verwendet. Das molare Verhältnis der Metallocene betrug also 70:30.
Es wurden ca. 5000 g eines frei fließenden Pulvers erhalten, das 0,14 Gew.-% Zr, 3,3 Gew.-% Al und 36 Gew.-% Si enthielt.

b) Polymerisation

In einem kontinuierlich betriebenen, vertikal gerührten Gasphasenreaktor mit einem Nutzvolumen von 200 l, der ein gerührtes Festbett aus feinteiligem Polymerisat enthielt, wurde unter Verwendung des in Beispiel 2 a) beschriebenen Katalysatorfeststoffs bei einer Temperatur von 80°C und unter einem Druck von 28 bar eine Monomermischung aus Propylen und Ethylen polymerisiert. Eine stationäre Konzentration der eingesetzten Monomere im Gasraum wurde dadurch eingestellt, daß man in Abständen von fünf Minuten die Gaszusammensetzung mittels eines Gaschromatographen bestimmte und durch Nachführen der benötigten Monomermengen regelte. Die zudosierte Menge an Katalysatorfeststoff wurde so bemessen, daß ein mittlerer Ausstoß von 20 kg Polypropylen pro Stunde aufrecht erhalten wurde. Ebenfalls in den Reaktor dosiert wurden 30 ml einer 2 M Lösung von Triisobutylaluminum in Heptan und 40 g pro Stunde einer 1 Gew.-%igen Lösung von Atmer® 163 (Fa. ICI) in Heptan.
Die Katalysatorproduktivität betrug 5000 g Polypropylen pro Gramm eingesetztem Katalysatorfeststoff.
Das erhaltene Polymerisat wurde so wie in Beispiel 1 b) stabilisiert und besaß eine Schmelztemperatur von 153,8°C, eine Schmelze-Fließrate von 1,7 g/10 min und enthielt 1,9 Gew.% Ethylen. Die GPC ergab $M_w$ 560000 g/mol, $M_n$ 160000 g/mol und Q (= $M_w/M_n$) 3,5. Durch TREF wurde es in die in Tabelle 3 wiedergegebenen Fraktionen zerlegt. Die Ausbeute der Fraktionierung, d.h. die Summe der Massenanteile der Fraktionen, betrug 98,9 Gew-%.

Tabelle 3

| Fraktion | Elutionstemperatur [°C] | Massenanteil [Gew.-%] | mittlere Molmasse der Fraktion (Zahlenmittel $M_n$ [g/mol) |
|---|---|---|---|
| 1 | 84,4 | 20,4 | 41000 |
| 2 | 85 | 1,6 | 41500 |
| 3 | 90 | 45,9 | 155700 |
| 4 | 94 | 10,4 | 149800 |
| 5 | 98 | 9,4 | 149200 |
| 6 | 102 | 11,2 | 187900 |

Da die Temperatur ($T_M$/2)+7,5°C der untersuchten Propylenpolymerisat-Zusammensetzung 84,4°C betrug, wurde die erste Fraktion bei dieser Temperatur eluiert. Die Fraktion 2 bei der Temperatur 85°C entspricht der Komponente C und die Fraktionen 3 - 6 bei den Temperaturen bei 90, 94, 98 und 102°C entsprechen der Komponente A. Es ergab sich somit eine Zusammen setzung aus

| | |
|---|---|
| Hauptkomponente A: | 76,9 Gew.-% |
| Nebenkomponente B: | 20,4 Gew.-% und |
| Nebenkomponente C: | 1,6 Gew.-%. |

Die Differenz Z betrug somit 1,1 Gew.-%.

c) Herstellung einer BOPP-Folie

Aus der erhaltenen teilkristallinen Propylenpolymerisat-Zusammensetzung wurde eine biaxial gereckten Folie

mit ca. 20 μm Dicke hergestellt. Die Herstellung erfolgte mit einer Pilotanlage der Fa. Brückner Maschinenbau mit einer 30 cm-Breitschlitzdüse. Es wurde mit einem Durchsatz von 150 kg/h gearbeitet. Die extrudierte Folie wurde auf eine Temperatur von 20°C abgekühlt und die verfestigte Folie in der Längsrichtung bei einer Temperatur von 116°C und einem Reckverhältnis von 4,5:1 und in der Querrichtung bei einer Temperatur von 157°C und einem Reckverhältnis von 8:1 gereckt. Die Eigenschaften der hergestellten biaxial gereckten Folie können der nachfolgenden Tabelle 7 entnommen werden.

Vergleichsbeispiel B

a) Herstellung des Katalysatorfeststoffs

Das in Beispiel 2 a) beschriebene Vorgehen wurde unter gleichen Bedingungen wiederholt. Allerdings wurde eine Suspension von 25,1 g (10 μmol/g $SiO_2$) rac-Dimethylsilandiylbis(2-methyl-4-phenylindenyl)zirkoniumdichlorid und 18,8 g (10 μmol/g $SiO_2$) rac-Dimethylsilandiylbis(2-methylindenyl)zirkoniumdichlorid in 1 Liter Toluol eingesetzt, d.h. das molare Verhältnis der Metallocene betrug 50:50.

Es wurden ca. 5000 g eines frei fließenden Pulvers erhalten, das 0,15 Gew.-% Zr, 3,3 Gew.-% A1 und 36 Gew.-% Si enthielt.

b) Polymerisation

Die Polymerisation erfolgte in der in Beispiel 1 b) eingesetzten Reaktorkaskade unter den gleichen Bedingungen. Es wurde allerdings der in Beispiel B a) hergestellte Katalysatorfeststoff eingesetzt.

Das erhaltene Polymerisat wurde so wie in Beispiel 1 b) stabilisiert und besaß eine Schmelztemperatur von 146°C, eine Schmelze-Fließrate von 5,7 g/10 min und enthielt 3,1 Gew.-% Ethylen. Die GPC ergab $M_w$ 250000 g/mol, $M_n$ 111000 g/mol und Q (= $M_w/M_n$) 2,3. Durch TREF wurde es in die in Tabelle 4 wiedergegebenen Fraktionen zerlegt. Die Ausbeute der Fraktionierung, d.h. die Summe der Massenanteile der Fraktionen, betrug 99,0 Gew-%.

Tabelle 4

| Fraktion | Elutionstemperatur [°C] | Massenanteil [Gew.-%] | mittlere Molmasse der Fraktion (Zahlenmittel $M_n$) [g/mol] |
|---|---|---|---|
| 1 | 80,5 | 48,0 | 43500 |
| 2 | 85 | 12,0 | 62000 |
| 3 | 90 | 4,0 | 88500 |
| 4 | 94 | 6,8 | 101600 |
| 5 | 98 | 12,7 | 189000 |
| 6 | 102 | 15,5 | 180500 |

Da die Temperatur ($T_M$/2)+7,5°C der untersuchten Propylenpolymerisat-Zusammensetzung 80,5°C betrug, wurde die erste Fraktion bei dieser Temperatur eluiert. Die Fraktionen 2 - 4 bei den Temperaturen 85, 90 und 94°C entsprechen der Komponente C und die Fraktionen 5 und 6 bei den Temperaturen 98 und 102°C der Komponente A. Es ergab sich somit eine Zusammensetzung aus

Hauptkomponente A: 28,2 Gew.-%
Nebenkomponente B: 48,0 Gew.-% und
Nebenkomponente C: 22,8 Gew.-%.

Die Differenz Z betrug somit 1,0 Gew.-%.

c) Herstellung einer BOPP-Folie

Aus der erhaltenen teilkristallinen Propylenpolymerisat-Zusammensetzung wurde eine biaxial gereckten Folie mit ca. 20 μm Dicke hergestellt. Die Herstellung erfolgte mit einer Pilotanlage der Fa. Brückner Maschinenbau mit einer 30 cm-Breitschlitzdüse. Es wurde mit einem Durchsatz von 150 kg/h gearbeitet. Die extrudierte Folie wurde auf eine

Temperatur von 20°C abgekühlt und die verfestigte Folie in der Längsrichtung bei einer Temperatur von 116°C und einem Reckverhältnis von 4,5:1 und in der Querrichtung bei einer Temperatur von 150°C und einem Reckverhältnis von 8:1 gereckt. Die Eigenschaften der hergestellten biaxial gereckten Folie können der nachfolgenden Tabelle 7 entnommen werden.

Vergleichsbeispiel C

a) Herstellung des Katalysatorfeststoffs

Es wurde der in Vergleichsbeispiel B a) hergestellte Katalysatorfeststoff eingesetzt.

b) Polymerisation

Die Polymerisation erfolgte in dem in Beispiel 2 b) eingesetzten Reaktor unter den gleichen Bedingungen. Es wurde allerdings der in Beispiel B a) hergestellte Katalysatorfeststoff eingesetzt.

Das erhaltene Polymerisat wurde genau so wie in Beispiel 1 b) stabilisiert und besaß eine Schmelztemperatur von 151,3°C und eine Schmelze-Fließrate von 1,3 g/10 min. Die GPC ergab $M_w$ 480000 g/mol, $M_n$ 110000 g/mol und Q (= $M_w/M_n$) 4,4. Durch TREF wurde es in die in Tabelle 5 wiedergegebenen Fraktionen zerlegt. Die Ausbeute der Fraktionierung, d.h. die Summe der Massenanteile der Fraktionen, betrug 98,9 Gew-%.

Tabelle 5

| Fraktion | Elutionstemperatur [°C] | Massenanteil [Gew.-%] | mittlere Molmasse der Fraktion (Zahlenmittel $M_N$) [g/mol] |
|---|---|---|---|
| 1 | 83,15 | 10,4 | 70000 |
| 2 | 85 | 7,3 | 74000 |
| 3 | 90 | 17,3 | 108000 |
| 4 | 94 | 5,7 | 92500 |
| 5 | 98 | 5,1 | 189400 |
| 6 | 102 | 5,7 | 198500 |
| 7 | 107 | 45,4 | 200400 |
| 8 | 112 | 2,0 | 238900 |

Da die Temperatur ($T_M$/2)+7,5°C der untersuchten Propylenpolymerisat-Zusammensetzung 83,15°C betrug, wurde die erste Fraktion bei dieser Temperatur eluiert. Die Fraktionen 2 - 4 bei den Temperaturen 85, 90 und 94°C entsprechen der Komponente C und die Fraktionen 5 - 8 bei den Temperaturen 98, 102, 107 und 112°C der Komponente A. Es ergab sich somit eine Zusammensetzung aus

| | |
|---|---|
| Hauptkomponente A: | 58,2 Gew.-% |
| Nebenkomponente B: | 10,4 Gew.-% und |
| Nebenkomponente C: | 30,3 Gew.-%. |

Die Differenz Z betrug somit 1,1 Gew.-%.

Vergleichsbeispiel D

a) Herstellung des Katalysatorfeststoffs

1000 g Kieselgel (SG 332, Porendurchmesser 50 μm, Fa. Grace; 8 h bei 180°C im Vakuum (1 mbar) ausgeheizt) wurde in 51 Toluol unter $N_2$-Atmosphäre suspendiert. Bei einer Temperatur von 18°C wurden 7,75 1 (6,38 kg) 1,53 molare Methylaluminoxanlösung (in Toluol, Fa. Witco) über 120 Minuten zugegeben. Anschließend wurde 7 h bei RT (Raumtemperatur) nachgerührt, filtriert und der Filterkuchen 2x mit je 2,5 l Toluol gewaschen. Anschließend wurde im Vakuum getrocknet. 1 kg des so hergestellten, MAO beladenen Kieselgels wurde in einem evakuierten Gefäß vorgelegt.

Anschließend wurde unter Rühren eine Lösung von 5,8 g (10 mmol) rac.-Dimethylsilandiylbis-(2-methyl-4,5-benzindenyl) zirkondichlorid in 1,32 l 1,53 molarer MAO-Lösung (in Toluol, Fa. Witco) zugegeben. Nach dem Druckausgleich mit $N_2$ wurde 30 Minuten bei RT (Raumtemperatur) durchgemischt. Dann wurde, zunächst bei 20°C, die Hauptmenge Lösungsmittel im Vakuum abdestilliert (bis kein Lösungsmittel mehr überging). Anschließend wurde die Temperatur in 5°C Schritten auf 55°C erhöht und der Katalysator solange getrocknet, bis er als oranges, gut rieselfähiges Pulver zurückblieb.

b) Polymerisation

In einem trockenen, $N_2$ gespülten 10 1 Autoklaven wurden 30 mmol Triisobutylaluminium (TIBA; 15 ml einer 2 M Lösung in Heptan), 500 mg einer 1 Gew.-%igen Lösung von Atmer® 163 (Fa. ICI) in Heptan und 3500 g flüssiges Propylen vorgelegt. Unter Rühren wurde der Autoklav auf 65°C aufgeheizt. Bei dieser Temperatur wurde Ethylen so zudosiert, daß der Druck gegenüber dem Propylendruck um ein bar anstieg. Anschließend wurde der Reaktor auf Raumtemperatur abgekühlt und bei dieser Temperatur 521 mg Trägerkatalysator über eine Schleuse mit $N_2$ zugegeben und der Autoklav auf 65°C aufgeheizt. Nach 60 Minuten Reaktionszeit wurde die Polymerisation durch Ablassen des restlichen Propylens abgebrochen und das Produkt über ein Bodenventil abgelassen. Es wurden 2300 g Polymergrieß erhalten, die eine Schmelztemperatur von 128°C, eine Schmelze-Fließrate von 350 g/10 min und einen Ethylen-Gehalt von 2,4 Gew.-% aufwiesen. Die GPC ergab $M_w$ 90000 g/mol, $M_n$ 45000 g/mol und Q (= $M_w/M_n$) 2,0. Durch TREF wurde er in die in Tabelle 6 wiedergegebenen Fraktionen zerlegt. Die Ausbeute der Fraktionierung, d.h. die Summe der Massenanteile der Fraktionen, betrug 98,7 Gew.-%.

Tabelle 6

| Fraktion | Elutionstemperatur [°C] | Massenanteil [Gew.-%] | mittlere Molmasse der Fraktion (Zahlenmittel $M_N$) [g/mol] |
|---|---|---|---|
| 1 | 71,5 | 18,7 | 28200 |
| 2 | 75 | 10,1 | 39400 |
| 3 | 80 | 7,8 | 53800 |
| 4 | 85 | 3,2 | 80500 |
| 5 | 90 | 18,9 | 78500 |
| 6 | 94 | 22,1 | 91000 |
| 7 | 98 | 15,7 | 121000 |
| 8 | 102 | 2,2 | 128900 |

Da die Temperatur ($T_M$/2)+7,5°C der untersuchten Propylenpolymerisat-Zusammensetzung 71,5°C betrug, wurde die erste Fraktion bei dieser Temperatur eluiert. Die Fraktionen 2 bis 6 bei den Temperaturen 75, 80, 85, 90 und 94°C entsprechen der Komponente C und die Fraktionen 7 und 8 bei den Temperaturen 98 und 102°C der Komponente A. Es ergab sich somit eine Zusammensetzung aus

Hauptkomponente A: 17,9 Gew.-%
Nebenkomponente B: 18,7 Gew.-% und
Nebenkomponente C: 62,1 Gew.-%.

Die Differenz Z betrug somit 1,3 Gew.-%.

Beispiel 3

Mittels eines Extruders wurde eine Mischung aus zwei Propylen-Polymerisaten hergestellt. Als Mischungskomponenten kamen ein über Metallocenkatalyse erhaltenes Propylen-Homopolymerisat mit einer Schmelze-Fließrate MFR von 1 g/10 min, einer Schmelztemperatur $T_m$ von 150°C und einem Verhältnis von $M_w/M_n$ von 1,8 und ein statistisch aufgebautes, über Metallocenkatalyse erhaltenes Propylen-Ethylen-Copolymerisat mit einem Ethylengehalt von 5,0 Gew.-%, einer Schmelze-Fließrate MFR von 60 g/10 min, einer Schmelztemperatur $T_m$ von 139°C und einem Verhältnis von $M_w/M_n$ von 1,9 zum Einsatz. Das Verhältnis der Mischungskomponenten betrug 80 Gew. -% des Propylen-Homopolmyerisats und 20 Gew.-% des Propylen-Ethylen-Copolymerisats. Die Extrusion erfolgte mittels eines Extruders ZSK

57 der Fa. Werner & Pfleiderer bei einer Temperatur von 230°C und einem Durchsatz von 150 kg/h.

Die Fraktionierung durch TREF ergab für die erhaltene Propylenpolymerisat-Zusammensetzung eine Zusammensetzung aus

| | |
|---|---|
| Hauptkomponente A: | 72,3 Gew.-% |
| Nebenkomponente B: | 13,2 Gew.-% und |
| Nebenkomponente C: | 13,0 Gew.-%. |

Die Differenz Z betrug somit 1,5 Gew.-%.

Tabelle 7

| | Beispiel 1 | Beispiel 2 | Vergl. beisp. A | Vergl. beisp. B | Vergl. beisp. C |
|---|---|---|---|---|---|
| Verarbeitungsfenster [°C] | 29 | 27 | 5 | 10 | 5 |
| E-Modul in Längsrichtung [MPa] | 2100 | 2000 | 2200 | 1700 | 1600 |
| E-Modul in Querrichtung [MPa] | 4300 | 4200 | 4500 | 4000 | 3800 |
| Haze [%] | 1,3 | 1,1 | 2,0 | 1,4 | 2,0 |
| $O_2$-Permeabilität [$cm^3$ 100$\mu$m/($m^2$ d bar)] | 430 | 440 | 450 | 420 | 430 |
| $H_2O$-Permeabilität [g 100$\mu$m/($m^2$ d)] | 0,27 | 0,25 | 0,28 | 0,26 | 0,31 |

wie die Beispiele und Vergleichsbeispiele zeigen, weisen die erfindungsgemäßen Propylenpolymerisat-Zusammensetzungen ein breites Temperaturverarbeitungsfenster auf. Außerdem besitzen die aus ihnen hergestellten biaxial gereckten Folien eine sehr gute Transparenz. Und dies insbesondere bei gleichzeitig guter Steifigkeit und guter Barrierewirkung gegen Sauerstoff und Wasserdampf.

**Patentansprüche**

**1.** Teilkristalline Propylenpolymerisat-Zusammensetzung, erhältlich durch Polymerisation von Propylen, Ethylen und/oder $C_4$-$C_{18}$-Alk-1-enen mittels Metallocenkatalysatoren, wobei mindestens 50 mol-% der enthaltenen Monomereinheiten durch Polymerisation von Propylen entstanden sind,
mit einer Schmelztemperatur $T_M$ im Bereich von 135°C bis 165°C,
wobei die Schmelztemperatur $T_M$ durch Differential Scanning Calorimetry (DSC) nach ISO-Norm 3146 durch Aufheizen mit einer Heizgeschwindigkeit von 20°C/min einer vorher aufgeschmolzenen Probe bestimmt und in °C gemessen wird und das Maximum der erhaltenen Kurve darstellt,
wobei sich die teilkristalline Propylenpolymerisat-Zusammensetzung in
von 65 bis 85 Gew.-% einer Hauptkomponente A,
von 10 bis 35 Gew.-% einer Nebenkomponente B und
von 0 bis 25 Gew.-% einer Nebenkomponente C
zerlegen läßt,
wobei man zur Bestimmung der Anteile der Komponenten A, B und C eine TREF (Temperature Rising Elution Fractionation) durchführt, bei der man die Polymerisate zunächst in siedendem Xylol löst, anschließend die Lösung mit einer Kühlrate von 10°C/h auf 25°C abkühlt und dann mit steigender Temperatur zunächst den bei der Temperatur ($T_M$/2)+7,5°C in Xylol löslichen Anteil der Propylenpolymerisat-Zusammensetzung löst und vom verbleibenden Feststoff abtrennt und anschließend mit steigender Temperatur bei allen höheren Temperaturen 70°C, 75°C, 80°C, 85°C, 90°C, 94°C, 98°C, 102°C, 107°C, 112°C, 117°C, 122°C und 125°C die im Temperaturintervall zwischen dieser Elutionstemperatur und der vorhergehenden Elutionstemperatur löslichen Fraktionen eluiert und diejenigen Fraktionen bei der weiteren Auswertung berücksichtigt, deren Masseanteil an der eingewogenen Propylenpolymerisat-Zusammensetzung mindestens 1 Gew.-% beträgt, und von allen zu berücksichtigenden Fraktionen die Molmassenverteilung durch Gelpermeationschromatographie (GPC) bei 145°C in 1,2,4-Trichlorbenzol mißt,
und die Hauptkomponente A von allen zu berücksichtigenden Fraktionen gebildet wird, die bei einer Temperatur oberhalb von ($T_M$/2)+7,5°C eluiert werden und eine mittlere Molmasse $M_n$ (Zahlenmittel) $\geq$ 120 000 g/mol aufweisen,
die Nebenkomponente B von der Fraktion gebildet wird, die bei der Temperatur ($T_M$/2)+7,5°C eluiert wird, und

die Nebenkomponente C von allen zu berücksichtigenden Fraktionen gebildet wird, die bei einer Temperatur oberhalb von ($T_M$/2)+7,5°C eluiert werden und eine mittlere Molmasse $M_n$ (Zahlenmittel) < 120 000 g/mol aufweisen.

**2.** Teilkristalline Propylenpolymerisat-Zusammensetzung nach Anspruch 1, wobei die Schmelze-Fließrate, bei 230°C und unter einem Gewicht von 2,16 kg nach ISO 1133, im Bereich von 1 bis 12 g/10 min liegt.

**3.** Teilkristalline Propylenpolymerisat-Zusammensetzung nach Anspruch 1 oder 2, wobei mindestens 85 mol-% der enthaltenen Monomereinheiten durch Polymerisation von Propylen entstanden sind.

**4.** Teilkristalline Propylenpolymerisat-Zusammensetzung nach den Ansprüchen 1 bis 3, wobei diese durch Homopolymerisation von Propylen oder durch Copolymerisation von Propylen und Ethylen hergestellt wurde.

**5.** Teilkristalline Propylenpolymerisat-Zusammensetzung nach den Ansprüchen 1 bis 4, wobei als Metallocen mindesteiis eines ausgewählt aus der Gruppe
Dimethylsilandiylbis(2-methylindenyl)zirkoniumdichlorid,
Dimethylsilandiylbis(2-methylbenz[e]indenyl)]-zirkoniumdichlorid,
Dimethylsilandiylbis(2-methyl-4-phenylindenyl)-zirkoniumdichlorid,
Dimethylsilandiylbis(2-methyl-4-[4'-tert.butylphenyl]-indenyl)zirkoniumdichlorid,
Dimethylsilandiylbis(-2-ethyl-4-[4'-tert.butyl-phenyl]-indenyl)zirkoniumdichlorid,
Dimethylsilandiylbis(2-propyl-4-[4'-tert.butylphenyl]-indenyl)zirkoniumdichlorid und
Dimethylsilandiyl(2-isopropyl-4-[4'-tert.butylphenyl]-indenyl)(2-methyl-4[4'-tert.butylphenyl)indenyl)-zirkoniumdichlorid
verwendet wurde.

**6.** Verfahren zur Herstellung der teilkristallinen Propylenpolymerisat-Zusammensetzung nach den Ansprüchen 1 bis 5, **dadurch gekennzeichnet, daß** man ein Katalysatorsystem enthaltend mindestens zwei Metallocen-Verbindungen verwendet und in einem einzelnen Reaktor polymerisiert.

**7.** Verfahren zur Herstellung der teilkristallinen Propylenpolymerisat-Zusammensetzung nach den Ansprüchen 1 bis 5 **dadurch gekennzeichnet, daß** man ein Katalysatorsystem mit nur einer Metallocen-Verbindung verwendet und in einer Reaktorkaskade aus mindestens zwei Reaktoren polymerisiert.

**8.** Verwendung der teilkristallinen Propylenpolymerisat-Zusammensetzung nach den Ansprüchen 1 bis 5 zur Herstellung von Folien, Fasern oder Formkörpern.

**9.** Folien, Fasern oder Formkörper enthaltend eine teilkristalline Propylenpolymerisat-Zusammensetzung nach den Ansprüchen 1 bis 5.

**10.** Biaxial gereckte Folien aus der teilkristallinen Propylenpolymerisat-Zusammensetzung nach den Ansprüchen 1 bis 5, die ein Reckverhältnis von mindestens 1:3 in der Längsrichtung und von mindestens 1:5 in der Querrichtung aufweisen.

## Revendications

**1.** Composition de polymère de propylène semi-cristallin, pouvant être obtenu par polymérisation du propylène, de l'éthylène et/ou d'alcènes-1 en $C_4$ à $C_{18}$ en utilisant des catalyseurs métallocènes, dans laquelle au moins 50 % en mole des unités monomères obtenues proviennent de la polymérisation du propylène, avec une température de fusion $T_M$ dans la plage allant de 135°C à 165 °C,

- dans laquelle la température de fusion $T_M$ est mesurée en °C par analyse calorimétrique différentielle (DSC) suivant la norme ISO 3146 en chauffant un échantillon préalablement fondu à une vitesse de chauffage de 20 °C/min, la température de fusion $T_M$ étant le maximum de la courbe obtenue,
- dans laquelle la composition de polymère de propylène semi-cristallin peut être décomposée en :
    - 65 à 85 % en poids d'un composant principal A,
    - 10 à 35 % en poids d'un composant secondaire B et
    - 0 à 25 % en poids d'un composant secondaire C,

- dans laquelle on réalise un fractionnement par température croissante d'élution *(TREF : Temperature Rising Elution Fractionation)* pour déterminer les proportions des composants A, B et C, au cours duquel on dissout tout d'abord les polymères dans du xylène bouillant, puis on refroidit la solution à une vitesse de refroidissement de 10 °C/h à 25 °C, puis on dissout d'abord, en augmentant la température, la fraction de composition de polymère de propylène qui est soluble dans le xylène à une température de $(T_M/2)+7,5$ °C, et on la sépare du solide restant puis, en augmentant la température, on élue à toutes les températures plus élevées 70 °C, 75 °C, 80 °C, 85 °C, 90 °C, 94 °C, 98 °C, 102 °C, 107 °C, 112 °C, 117 °C, 122 °C et 125 °C les fractions solubles dans l'intervalle de température formé entre cette température d'élution et la température d'élution précédente, et on prend en considération, pendant l'évaluation suivante, les fractions dont la proportion en poids est au moins de 1 % en poids du poids initial de la composition de polymère de propylène, et on mesure, par chromatographie d'exclusion diffusion (GPC) à 145°C dans du 1,2,4-trichlorobenzène, la distribution des masses molaires de toutes les fractions à prendre en considération,
- et le composant principal A est formé par toutes les fractions à prendre en considération, qui sont éluées à une température au-dessus de $(T_M/2)+7,5$ °C et qui présentent une masse molaire moyenne $M_n$ (moyenne en nombre) ≥ 120 000 g/mol,
- le composant secondaire B est formé par la fraction qui est éluée à la température $(T_M/2)+7,5$ °C, et
- le composant secondaire C est formé par toutes les fractions à prendre en considération qui sont éluées à une température au dessus de $(T_M/2)+7,5$ °C, et qui présentent une masse molaire moyenne $M_n$ (moyenne en nombre) < 120 000 g/mol.

**2.** Composition de polymère de propylène semi-cristallin selon la revendication 1, dans laquelle l'indice de fluidité à l'état fondu, à 230 °C et sous un poids de 2,16 kg, est dans la plage allant de 1 à 12 g/10 min suivant la norme ISO 1133.

**3.** Composition de polymère de propylène semi-cristallin selon la revendication 1 ou 2, dans laquelle au moins 85 % en mole des unités monomères obtenues proviennent de la polymérisation du propylène.

**4.** Composition de polymère de propylène semi-cristallin selon les revendications 1 à 3, dans laquelle celle ci est obtenue par homo-polymérisation du propylène ou par copolymérisation du propylène et de l'éthylène.

**5.** Composition de polymère de propylène semi-cristallin selon les revendications 1 à 4, dans laquelle on utilise comme métallocène au moins un composé choisi parmi le groupe :

- dichlorure de diméthylsilanediylbis(2-méthylindényl)zirconium,
- dichlorure de diméthylsilanediylbis(2-méthylbenz[e]indényl)-zirconium,
- dichlorure de diméthylsilanediylbis(2-méthyl-4-phénylindényl)-zirconium,
- dichlorure de diméthylsilanediylbis(2-méthyl-4-[4'-tert.butylphényl)-indényl)-zirconium,
- dichlorure de diméthylsilanediylbis(2-éthyl-4-[4'-tert.butylphényl]-indényl)zirconium,
- dichlorure de diméthylsilanediylbis(2-propyl-4-[4'-tert.butylphényl]-indényl)zirconium, et
- dichlorure de diméthylsilanediyle(2-isopropyl-4-[4'-tert.butylphényl]-indényl)-(2-méthyl-4-[4'-tert.butylphényl] indényl)-zirconium.

**6.** Procédé de préparation de la composition de polymère de propylène semi-cristallin selon les revendications 1 à 5, **caractérisé en ce qu'**on utilise un système catalytique comprenant au moins deux composés métallocènes, et qu'on réalise la polymérisation dans un seul réacteur.

**7.** Procédé de préparation de la composition de polymère de propylène semi-cristallin selon les revendications 1 à 5, **caractérisé en ce qu'**on utilise un système catalytique avec seulement un composé métallocène, et qu'on réalise la polymérisation dans une cascade de réacteurs d'au moins deux réacteurs.

**8.** Utilisation de la composition de polymère de propylène semi-cristallin selon les revendications 1 à 5, pour préparer des films, des fibres ou des corps moulés.

**9.** Films, fibres, ou corps moulés comprenant une composition de polymère de propylène semi-cristallin selon les revendications 1 à 5.

**10.** Films bi-orientés étirés, constitués de la composition de polymère de propylène semi-cristallin selon les revendications 1 à 5, et ayant un taux d'élongation d'au moins 1:3 dans le sens de la longueur et d'au moins 1:5 dans le sens transversal.

**Claims**

1. A semicrystalline propylene polymer composition obtainable by polymerizing propylene, ethylene and/or $C_4$-$C_{18}$-1-alkenes using metallocene catalysts, where at least 50 mol% of the resultant monomer units stem from the polymerization of propylene,
with a melting point $T_M$ of from 135 to 165°C,
where the melting point $T_M$ is measured in °C by differential scanning calorimetry (DSC) to ISO 3146 by heating a previously melted specimen at a heating rate of 20°C/min, and is the maximum of the resultant curve,
where the semicrystalline propylene polymer composition can be broken down into
from 65 to 85% by weight of a principal component A,
from 10 to 35% by weight of an ancillary component B and
from 0 to 25% by weight of an ancillary component C,
where the proportions of components A, B and C are determined by carrying out TREF (temperature rising elution fractionation) in which the polymers are firstly dissolved in boiling xylene and the solution is then cooled at a cooling rate of 10°C/h to 25°C, and then, as the temperature rises, that fraction of the propylene polymer composition which is soluble in xylene at $(T_M/2)+7.5$°C is firstly dissolved and separated off from the remaining solid, and then, as the temperature rises, at all of the higher temperatures 70°C, 75°C, 80°C, 85°C, 90°C, 94°C, 98°C, 102°C, 107°C, 112°C, 117°C, 122°C and 125°C, the fractions soluble within the temperature range between this elution temperature and the preceding elution temperature are eluted, and the fractions taken into consideration during the evaluation which follows are those whose proportion by weight is at least 1% by weight of the initial weight of the propylene polymer composition, and gel permeation chromatography (GPC) at 145°C in 1,2,4-trichlorobenzene is used to measure the molar mass distribution of all of the fractions to be taken into consideration,
and the principal component A is formed by all of the fractions which are to be taken into consideration and are eluted at above $(T_M/2)+7.5$°C and have an average molar mass $M_N$ (number average) ≥ 120,000 g/mol,
the ancillary component B is formed by the fraction which is eluted at $(T_M/2)+7.5$°C, and
the ancillary component C is formed by all of the fractions which are to be taken into consideration and are eluted at above $(T_M/2)+7.5$°C and have an average molar mass $M_N$ (number average) < 120,000 g/mol.

2. The semicrystalline propylene polymer composition according to claim 1, where the melt flow rate is in the range from 1 to 12 g/10 min at 230°C and using a load of 2.16 kg to ISO 1133.

3. The semicrystalline propylene polymer composition according to claim 1 or 2, where at least 85 mol% of the monomer units present stem from polymerization of propylene.

4. The semicrystalline propylene polymer composition according to claims 1 to 3, which was prepared by homopolymerization of propylene or by copolymerization of propylene and ethylene.

5. The semicrystalline propylene polymer composition according to any of claims 1 to 4, where the metallocene used comprised at least one compound selected from the group consisting of
dimethylsilanediylbis(2-methylindenyl)zirconium dichloride,
dimethylsilanediylbis(2-methylbenz[e]indenyl)]zirconium dichloride,
dimethylsilanediylbis(2-methyl-4-phenylindenyl)zirconium dichloride,
dimethylsilanediylbis(2-methyl-4[4'-tert-butylphenyl]-indenyl)zirconium dichloride,
dimethylsilanediylbis(2-ethyl-4[4'-tert-butylphenyl]-indenyl)zirconium dichloride,
dimethylsilanediylbis(2-propyl-4[4'-tert-butylphenyl]-indenyl)zirconium dichloride and
dimethylsilanediyl (2-isopropyl- 4 [4'-tert-butylphenyl] -indenyl) (2-methyl- 4 [4'-tert-butylphenyl] indenyl) -zirconium dichloride.

6. A process for preparing the semicrystalline propylene polymer composition according to any of claims 1 to 5, which comprises using a catalyst system comprising at least two metallocene compounds and polymerizing in a single reactor.

7. A process for preparing the semicrystalline propylene polymer composition according to any of claims 1 to 5, which comprises using a catalyst system with only one metallocene compound and polymerizing in a reactor cascade composed of at least two reactors.

8. The use of the semicrystalline propylene polymer composition according to any of claims 1 to 5 for producing films, fibers or moldings.

**9.** A film, a fiber or a molding comprising a semicrystalline propylene polymer composition according to any of claims 1 to 5.

**10.** A biaxially stretched film made from the semicrystalline propylene polymer composition according to any of claims 1 to 5 and having a longitudinal stretching ratio of at least 1:3 and a transverse stretching ratio of at least 1:5.

FIG.1